# EUROPEAN PATENT SPECIFICATION

(11) **EP 3 737 129 B1**
(45) Date of publication and mention of the grant of the patent: **30.08.2023**
(21) Application number: 19764790.2
(22) Date of filing: 06.03.2019
(51) Int. Cl.: H04W 8/22, G06F 21/53, G06F 21/55, H04L 9/40

(54) **MANAGEMENT METHOD FOR OFFLINE MANAGEMENT INSTRUCTION AND TERMINAL**
VERWALTUNGSVERFAHREN FÜR OFFLINE-VERWALTUNGSANWEISUNG UND ENDGERÄT
PROCÉDÉ DE GESTION POUR UNE INSTRUCTION DE GESTION HORS LIGNE ET TERMINAL

(30) Priority: 07.03.2018 CN 201810188418
(43) Date of publication of application: 11.11.2020
(73) Proprietor: HUAWEI TECHNOLOGIES CO., LTD., Shenzhen, Guangdong 518129 (CN)
(72) Inventor: WANG, Sishan, Shenzhen, Guangdong 518129 (CN); SUN, He, Shenzhen, Guangdong 518129 (CN); LAITINEN, Pekka, Shenzhen, Guangdong 518129 (CN); CHANG, Xinmiao, Shenzhen, Guangdong 518129 (CN)
(74) Representative: Grünecker Patent- und Rechtsanwälte PartG mbB
(86) International application number: PCT/CN2019/077219
(87) International publication number: WO 2019/170111

(56) References cited:
- WO-A1-2017/035758
- WO-A1-2017/088135
- WO-A1-2017/167166
- CN-A- 104 581 214
- CN-A- 107 466 031
- US-B1- 9 069 952
- XU JUN: "Research on high performance secure mobile terminal based on offline business detection", 2017 4th International Conference on Information Science and Control Engineering (ICISCE), 16 November 2017 (2017-11-16), XP033255027,

## Description

### TECHNICAL FIELD

The present invention relates to the field of security management, and in particular, to an offline management instruction management method and a terminal.

### BACKGROUND

With development of electronic products and requirements of users for data security, currently, many terminals may have two execution environments at the same time with support of hardware. One is a common execution environment, which is also referred to as a rich execution environment (rich execution environment, REE), and the common execution environment is a running environment that does not have a specific security function. The other is a trusted execution environment (trusted execution environment, TEE), and the TEE has a security function, can meet a specific security requirement of a user, and can implement a running mechanism separated from the REE.
US 9 069 952 B1 discloses an electronic device comprising a processor, an operating system, a memory, and a trusted security zone manager to manage the trusted security zone. The electronic device further comprises an anti-trusted-security-zone in the trusted security zone that, when installed and managed by the trusted security zone manager, places non-trusted applications into the anti-trusted-security-zone for execution, restricts access of the non-trusted applications to at least some resources of the electronic device outside the anti-trusted-security-zone, alerts the user when the non-trusted application inside the anti-trusted-security-zone desires access to any restricted resource of the electronic device outside the anti-trusted-security-zone, asks the user for permission to access the desired resource outside the anti-trusted-security-zone, grants access for the non-trusted application to the desired resource outside the anti-trusted-security-zone upon the permission by the user, moves the applications from the anti-trusted-security-zone to the normal zone that are determined not to be malicious, keeps the applications within the anti-trusted-security-zone that do not need to execute outside the anti-trusted-security-zone, and deletes the applications that are determined to be malicious, whereby the risk that non-trusted applications can cause harm to the electronic device is reduced.

In a TEE management framework (TEE management framework, TMF), a global platform (Global Platform, GP) releases a standard for implementing remote TEE management. The standard defines a management framework and management permission for a security domain (security domain, SD)/a trusted application (trusted application, TA) in the TEE, a data structure, verification, and an execution requirement of a management instruction, and the like. All management instructions defined in the TMF can be executed only after authorization is verified. In a process of performing authorization by using an authorization token (authorization token), when an instruction is generated, a use condition of the authorization token may be limited by using a constraint (constraint) parameter. However, the constraint parameter can only resolve an authorization verification problem of an offline management instruction in an offline scenario, but cannot prevent an application from maliciously occupying a TEE resource by using a valid offline management instruction. For example, a malicious application may use a valid offline management instruction for offline installing a TA 1, a TA 2, and the like, to maliciously install a TA that is not used (or a CA that has no service dependency relationship with the TA on an REE side) in the TEE. In other words, in a TEE offline management scenario, the TEE can only execute a plurality of different offline management instructions that can succeed in authorization verification, but does not have a capability of identifying whether use of the offline management instructions is trusted. In other words, the TEE has a capability of verifying whether the offline management instructions are valid and executing a valid offline management instruction, but does not have a capability of identifying whether use behavior of the offline management instructions is valid.

### SUMMARY

The present invention provides an offline management instruction management method and a terminal. A TEE of the terminal generates an offline management instruction based on an offline management parameter carried in the offline management instruction, and manages, based on an offline management policy, an SD or a TA installed or updated according to the offline management instruction, so that the TEE has a capability of actively preventing an application from maliciously occupying a TEE resource by using a valid offline management instruction.

According to a first aspect, an offline management instruction management method is provided. The management method may include:
receiving, by a trusted execution environment TEE of a terminal, an offline management instruction sent by a rich execution environment REE of the terminal, where the offline management instruction includes an offline management parameter, and the offline management parameter includes at least one of a usage duration threshold and/or a usage quantity threshold;
executing, by the TEE, an offline management operation corresponding to the offline management instruction, and generating an offline management policy based on the offline management parameter; and
when a usage status of a security domain SD or a trusted application TA does not meet the offline management policy, deleting, by the TEE, the SD or the TA, or restoring, by the TEE, the SD or the TA to a status before update, where the SD or the TA is installed or updated offline by the TEE according to the offline management instruction.

Based on the provided offline management instruction management method, the TEE of the terminal generates the offline management policy based on the offline management parameter carried in the offline management instruction, and determines, based on the offline management policy, whether the SD or the TA installed or updated according to the offline management instruction meets a case of maliciously occupying a TEE resource, so that the TEE of the terminal has an active defense capability.

With reference to the first aspect, in a first possible implementation of the first aspect, the offline management instruction includes an offline SD installation instruction or an offline SD update instruction, and the offline management policy is receiving an offline TA installation instruction within the usage quantity threshold or the usage duration threshold.

With reference to the first aspect, in a second possible implementation of the first aspect, the offline management instruction includes an offline TA installation instruction or an offline TA update instruction, and the offline management policy is performing a preset operation within the usage quantity threshold or the usage duration threshold.

With reference to the first aspect, or the first or the second possible implementation of the first aspect, in a third possible implementation of the first aspect, before the executing, by the TEE, an offline management operation corresponding to the offline management instruction, the management method further includes:
determining, by the TEE, whether identification information of the offline management instruction is included in first information stored in the TEE, where the first information includes identification information of an offline management instruction that the TEE refuses to execute.

With reference to the first aspect, in a third possible implementation of the first aspect, the management method further includes:
adding, by the TEE, the identification information of the offline management instruction to the first information when a quantity of times that the SD or the TA is deleted by the TEE reaches a preset threshold.

With reference to the third or the fourth possible implementation of the first aspect, in a fifth possible implementation of the first aspect, the identification information includes at least one of an identifier of the offline management instruction, a digest of the offline management instruction, and an identifier of an SD or a TA that needs to be managed offline according to the offline management instruction.

With reference to the first aspect, in a sixth possible implementation of the first aspect, the executing, by the TEE, an offline management operation corresponding to the offline management instruction includes:
installing, by the TEE, the TA offline or updating the TA offline in a preset SD according to the offline management instruction, so that TEE security is enhanced.

With reference to any one of the first aspect, or the first to the sixth possible implementations of the first aspect, after the executing, by the TEE, an offline management operation corresponding to the offline management instruction, the management method further includes:
updating, by the TEE, association information, and marking the SD or the TA as an offline state, where the association information includes a correspondence between an SD installed in the TEE and a TA installed in the SD installed in the TEE.

With reference to any one of the first aspect, or the first to the seventh possible implementations of the first aspect, in an eighth possible implementation of the first aspect, the management method further includes:
when the usage status of the SD or the TA meets the offline management policy, removing, by the TEE, a limitation imposed on the SD or the TA based on the offline management policy.

With reference to the eighth possible implementation of the first aspect, in a ninth possible implementation of the first aspect, the removing, by the TEE, a limitation imposed on the SD or the TA based on the offline management policy includes:
deleting, by the TEE, the offline management policy; or canceling, by the TEE, the mark indicating that the SD or the TA is in an offline state; or modifying, by the TEE, a lifecycle state corresponding to the SD or the TA into an executable state.

With reference to any one of the first aspect, or the first to the ninth possible implementation of the first aspect, in a tenth possible implementation of the first aspect, the offline management instruction further includes a target SD identifier, and the management method further includes:
when the usage status of the TA meets the offline management policy, migrating, by the TEE, the TA from the preset SD to a target SD corresponding to the target SD identifier, and deleting a correspondence between the preset SD and the TA in the association information.

With reference to any one of the first aspect, or the first to the tenth possible implementations of the first aspect, in an eleventh possible implementation of the first aspect, before the usage status of the SD or the TA meets the offline management policy, the TEE limits resource access permission of the SD or the TA.

With reference to any one of the first aspect, or the first to the eleventh possible implementations of the first aspect, in a twelfth possible implementation of the first aspect, the management method further includes:
displaying, by the TEE, first prompt information on a screen of the terminal based on the usage status of the SD; or
displaying, by the TEE, second prompt information on a screen of the terminal based on the usage status of the TA.

With reference to any one of the first aspect, or the first to the twelfth possible implementations of the first aspect, in a thirteenth possible implementation of the first aspect, the offline management instruction further includes at least one first client application CA identifier, and the at least one first CA identifier is an identifier corresponding to at least one first CA authorized to use the offline management instruction; and the receiving, by a trusted execution environment TEE of a terminal, an offline management instruction sent by a rich execution environment REE of the terminal includes:
receiving, by the TEE, an offline management instruction sent by a second CA in the REE; and
before the executing, by the TEE, an offline management operation corresponding to the offline management instruction, the management method further includes:
   when a second CA identifier corresponding to the second CA is consistent with any one of the at least one first CA identifier, executing, by the TEE, the offline management operation corresponding to the offline management instruction.

According to the offline management instruction management method, the offline management instruction carries the user CA identifier, so that a CA that does not have use permission is prevented from obtaining a valid offline management instruction to maliciously occupy a TEE resource.

With reference to the thirteenth possible implementation of the first aspect, the offline management instruction is an offline deletion instruction; and after the TEE determines that the second CA identifier corresponding to the second CA is consistent with the any one of the at least one first CA identifier, the management method further includes:
when no first CA corresponding to the at least one first CA identifier exists in the REE other than the second CA, executing, by the TEE, the offline management operation corresponding to the offline management instruction.

With reference to any one of the first aspect or the foregoing possible implementations of the first aspect, in a fifteenth possible implementation of the first aspect, the offline management instruction further includes indication information, and the indication information is used to indicate to synchronously delete the SD in which the TA is located; and
the deleting, by the TEE, the TA includes:
when no associated TA exists in the SD in which the TA is located, deleting, by the TEE, the TA and the SD in which the TA is located.

With reference to any one of the first aspect or the foregoing possible implementations of the first aspect, in a sixteenth possible implementation of the first aspect, the offline management instruction includes the offline TA installation instruction; and after the executing, by the TEE, an offline management operation corresponding to the offline management instruction, the management method includes:
when no third CA corresponding to at least one third CA identifier exists in the REE, deleting, by the TEE, the TA, where
the at least one third CA is at least one third CA identifier obtained and recorded by the TEE according to the offline TA installation instruction for installing the TA offline or from the offline installed TA, and the at least one third CA corresponding to the at least one third CA identifier is a CA in which the REE needs to use the TA; the offline TA installation instruction includes at least one first CAidentifier, and the at least one first CA identifier is an identifier corresponding to at least one first CA authorized to use the offline TA installation instruction; and the at least one third CA includes the at least one first CA identifier.

According to a second aspect, a terminal is provided. The terminal includes a trusted execution environment TEE and a rich execution environment REE, and the TEE includes a receiving unit, a sending unit, and a processing unit. The terminal may perform the method in any one of the first aspect or the possible implementations of the first aspect.

According to a third aspect, a terminal is provided. The terminal includes a TEE and a rich execution environment REE, the TEE includes a receiver, a transmitter, a memory, and a processor, and the receiver, the transmitter, the memory, and the processor are connected to each other. The terminal may perform the method in any one of the first aspect or the possible implementations of the first aspect.

According to a fourth aspect, a computer-readable storage medium is provided, including an instruction. When the instruction is run on a device, the device is enabled to perform the method in any one of the first aspect or the possible implementations of the first aspect.

According to a fifth aspect, a computer program product including an instruction or a computer program is provided. When the instruction is run on a computer, the computer is enabled to perform the method in any one of the first aspect or the possible implementations of the first aspect.

According to a sixth aspect, a communications apparatus is provided, including a processor. The processor is configured to support the communications apparatus in performing the method in any one of the first aspect or the possible implementations of the first aspect.

Based on the provided offline management instruction management method and the provided terminal, the TEE of the terminal generates the offline management policy based on the offline management parameter carried in the offline management instruction, and determines, based on the offline management policy, whether the SD or the TA installed or updated according to the offline management instruction meets a case of maliciously occupying a TEE resource, so that the TEE of the terminal has a capability of actively defending against a replay and a DoS attack.

### BRIEF DESCRIPTION OF DRAWINGS

FIG. 1 is a schematic diagram of a deployment manner of an offline management instruction according to an embodiment of the present invention;
FIG. 2 is a schematic flowchart of an offline management method according to an embodiment of the present invention;
FIG. 3 is a schematic flowchart of an offline management instruction management method according to an embodiment of the present invention;
FIG. 4 is a schematic flowchart of another offline management instruction management method according to an embodiment of the present invention;
FIG. 5 is a schematic diagram of an internal structure of a TEE according to an embodiment of this application;
FIG. 6 is a schematic flowchart of another offline management instruction management method according to an embodiment of the present invention;
FIG. 7 is a schematic flowchart of still another offline management instruction management method according to an embodiment of the present invention;
FIG. 8A and FIG. 8B are a schematic flowchart of yet another offline management instruction management method according to an embodiment of the present invention;
FIG. 9 is a schematic structural diagram of a terminal according to an embodiment of the present invention;
FIG. 10 is a schematic structural diagram of another terminal according to an embodiment of the present invention; and
FIG. 11 is a schematic diagram of a communications apparatus according to an embodiment of the present invention.

### DESCRIPTION OF EMBODIMENTS

In the embodiments of the present invention, a terminal includes two coexisting running environments: an REE and a TEE. A client application (client application, CA) is run in the REE, and a TA is run in the TEE. Compared with the REE, the TEE is a running environment that has a specific security function. The TEE is a security area that exists in the terminal and that is separated from the REE. During specific implementation, the TEE may be a security mode of a main processor, or may be an assistant processor separated from the main processor. The TEE is separated from the REE and the CA in the REE, so as to ensure that various types of sensitive data are stored, processed, and protected in a trusted environment. The TEE provides a secure execution environment for the TA, including integrity verification in an execution process, secure communication with the CA in the REE, trusted storage, an input and an output to an external secure terminal, key and encryption algorithm management, time management, and the like.

In a TMF, to ensure security of the TEE, the TEE performs a corresponding management operation only after authentication (Authentication) and authorization (Authorization) verification is performed on various remote management instructions sent by an external entity OWE, for example, instructions for creating an SD and installing a TA. The OWE is an entity having a TEE management function, and is usually a trusted service manager (Trusted Service Manager, TSM).

The SD is used as a representative of a service provider (service provider, SP) and/or an OWE in the TEE in remote management of the TEE. The TEE implements separation between different OWEs by using the SD. A key used to establish a secure channel with an external entity or perform authorization token verification is deployed in the SD. All administration operations (administration operation) defined in the TMF are performed by the SD. One SD is responsible for managing a sub-SD and a TA that are associated with the SD. In the TMF framework, different types of permission are assigned to SDs when the SDs are created.

In the TMF, SDs are classified into SD-A (SD-Authorize), SD-P (SD-Process), and SD-T (SD-Target) in terms of a function. SD-A is an SD having a token verification function. SD-P is an SD that receives and executes an instruction and that performs a management operation. SD-T implements an instruction. For example, when an instruction instructs to install a TA 1 in an SD 1, the SD 1 is SD-T. SD-Ainformation is in a token, and SD-P information is related to a transport layer, a security layer, and a service. In an encryption scenario, if an offline management instruction is encrypted, only correct SD-P can perform decryption successfully.

When an SD (SD-P) receives a remote management instruction, the SD may establish, by using a security layer protocol specified in the TMF, a security channel with an OWE that generates the instruction, to implicitly verify authorization of the management instruction. After the verification succeeds, if the SD has permission corresponding to the management instruction, the SD performs a corresponding management operation. Alternatively, if the management instruction carries an authorization token, and SD-Authorize (SD-A) indicated by the authorization token is an upper-level SD of SD-P, after a verification key in the upper-level SD is used to verify the authorization token and the verification succeeds, and SD-A has corresponding management permission, SD-P completes explicit verification on authorization of the management instruction, and performs a corresponding management operation.

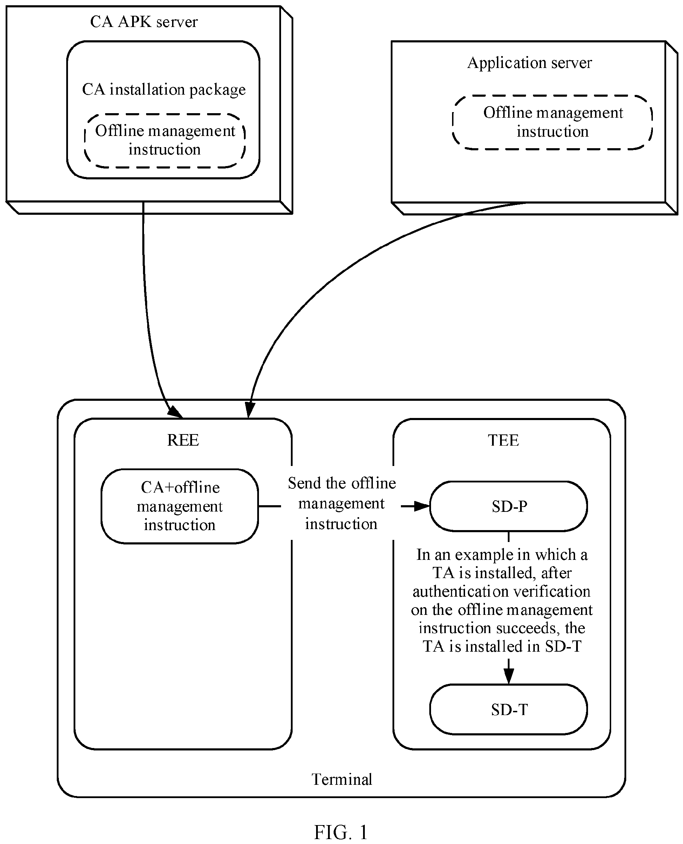

In an offline management scenario of the TEE, an offline management instruction is explicitly authorized by carrying an authorization token. If the authorization token is used for explicit authorization, the SD does not need to establish a real-time security channel with a manager of the SD: the OWE, to perform direct communication, but a valid offline management instruction carrying the authorization token can be verified and executed provided that the valid offline management instruction is sent to a target SD. In this case, an offline management mode of the TEE can be implemented, to be specific, the TEE can be managed offline by using the valid offline management instruction, without directly interacting with the manager of the SD in real time. Offline management has the following advantages:
1. Quick deployment of the TA by the SP is facilitated. For example, as shown in FIG. 1, the offline management instruction may be sent to various application management servers, or the offline management instruction and a CA installation package are packaged into an application data packet and the application data packet is placed in an application management server of a CAAPK.
   For example, when the REE of the terminal needs to install the CA, the REE obtains, from the application management server, the application data packet including the offline management instruction. In a process in which the REE of the terminal installs the CA, the REE directly offline installs, by using an offline TA installation instruction, the TA that needs to be used by the CA. Alternatively, when the terminal needs to update the TA, the terminal directly obtains, from the application management server, the application data packet including an offline TA update instruction, and updates the TA by using the offline update instruction. The SP does not need to generate an independent TA update instruction for each device or each TEE, thereby implementing quick deployment of the TA.
2. There is no need to apply to the TSM of the SP or the TEE issuer for creating an SD and installing a TA online, thereby reducing load on a server side.
3. A user does not need to temporarily download the TA when the terminal is used, thereby reducing a waiting time for temporary downloading, and avoiding a case in which downloading is performed again because of communication transmission interruption or a communication transmission error in a downloading process.

When explicit authorization is performed by using the authorization token, because no direct communication is performed between the target SD and the manager of the target SD: the OWE, authorization of the OWE is implemented by using the authorization token. The TMF adds a constraint parameter to the authorization token to limit a use condition of the authorization token, thereby reducing overuse of the offline management instruction. For example, a use condition of the offline management instruction may be limited based on a device identifier (device ID), a model identifier (model ID), version information, and some other vendor-defined constraint conditions. Because the authorization token is used to resolve a trust or authorization verification problem in an offline scenario, currently, adding the constraint parameter to the authorization token cannot prevent a replay and a DoS attack (DoS attack), but the constraint parameter can be merely used to limit the use condition of the management instruction as much as possible, so as to reduce a security risk. The TEE does not have a capability of actively defending against a replay and a DoS attack, and some applications (CA) may maliciously obtain a valid offline management instruction and send the instruction to the TEE for use (for example, installing "zombie applications"). Consequently, a TEE resource is occupied, and normal use of the TEE is affected. The zombie applications are some unnecessary applications in the TEE that are not used by the CA.

In an encoding process, encoding of a token constraint (token constrain) may include content in Table 1.

**Table 1**

| | | |
|---|---|---|
| Tag (Tag) Length (Length) | Octet value (Value Octets) | Presence |
| Constraint tag (ConstraintTag) | L Token constraint value | M |

The token constraint value (token constraint value) may include content shown in Table 2:

**Table 2**

| | |
|---|---|
| Constraint name ITU-X680 symbol | Constraint tag octet identifier value (ConstraintTag Octet Identifier Values) Constraint value |
| Constraint device (ConstraintDeviceID) | [PRIVATE1] UUID 0xc1 UUID |
| Constraint device model identifier (ConstraintModelID) | [PRIVATE2] UUID 0xc2 UUID |
| Minimum constraint version (ConstraintMinVersion) | [PRIVATE3] INTEGER 0xc3 Minimum version (integer) |
| Maximum constraint version (ConstraintMaxVersion) | [PRIVATE4] INTEGER 0xc4 Maximum version (integer) |
| Constraint parameter digest (ConstraintParamsDigest) | / OxeO A command parameter digest is the constraint parameter digest |
| Reserved space (Reserved for future use) | A range of a tag number of any private-class basic type is [6-30]; |
| A range of a tag number any private-class construction type is [1-30][0xc5-0xde] | |
| [0xe1-0xfe] Reserved | |
| Dedicated extension (proprietary extensions) | Specified by a specific provider |

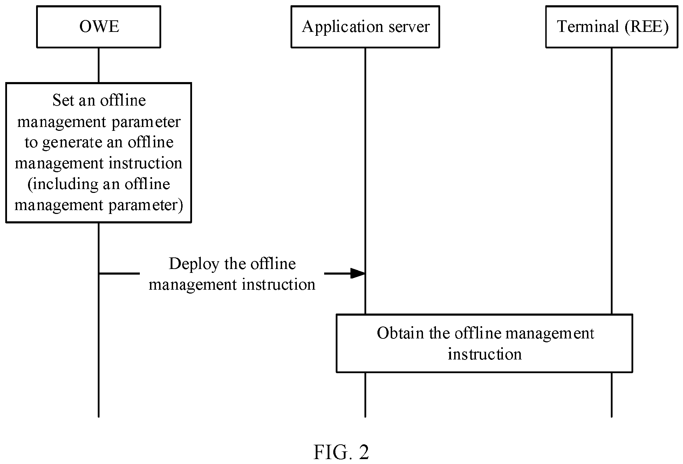

Embodiments of the present invention provide an offline management instruction management method and a terminal. A TEE of the terminal has a capability of actively defending against a replay and a DoS attack. As shown in FIG. 2, an offline management parameter is set by using a management instruction generator (an SP-TSM or an OWE), and an offline management instruction generated by using the OWE is deployed on an application management server in two forms shown in FIG. 1. When obtaining the offline management instruction from the application management server, the terminal generates an offline management policy based on the offline management parameter in the offline management instruction, and subsequently manages, based on the offline management policy, an SD or a TA installed or updated according to the offline management instruction, to actively identify a scenario in which the offline management instruction may be maliciously used.

In the embodiments of the present invention, the offline management parameter may be a time parameter or a quantity parameter. For example, the offline management parameter may be at least one of a usage time threshold and a usage quantity threshold. The offline management instruction may include installing the SD and installing the TA, updating the SD and updating the TA, deleting the SD and deleting the TA, and the like.

The terminal (terminal) mentioned in the embodiments of the present invention may also be referred to as a system, a subscriber unit, a subscriber station, a mobile station, a mobile console, a remote station, a remote terminal, a mobile device, a user terminal, a mobile terminal, a wireless communications device, a user agent, a user apparatus, or user equipment (user equipment, UE). For example, the terminal may be a cellular phone, a cordless phone, a smartwatch, a wearable device, a tablet device, a drone, a vending machine, a sensor device, a session initiation protocol (session initiation protocol, SIP) phone, a wireless local loop (wireless local loop, WLL) station, a personal digital assistant (personal digital assistant, PDA), a handheld device having a wireless communication function, a computing device, a vehicle-mounted communications module, a smart meter, a smart home device, or another processing device connected to a wireless modem.

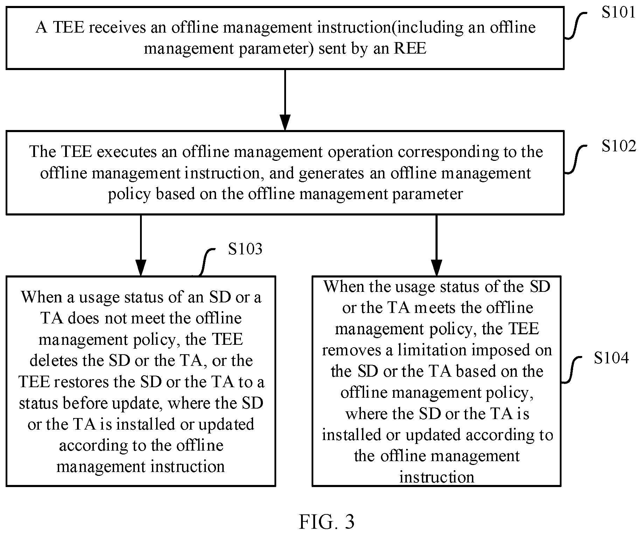

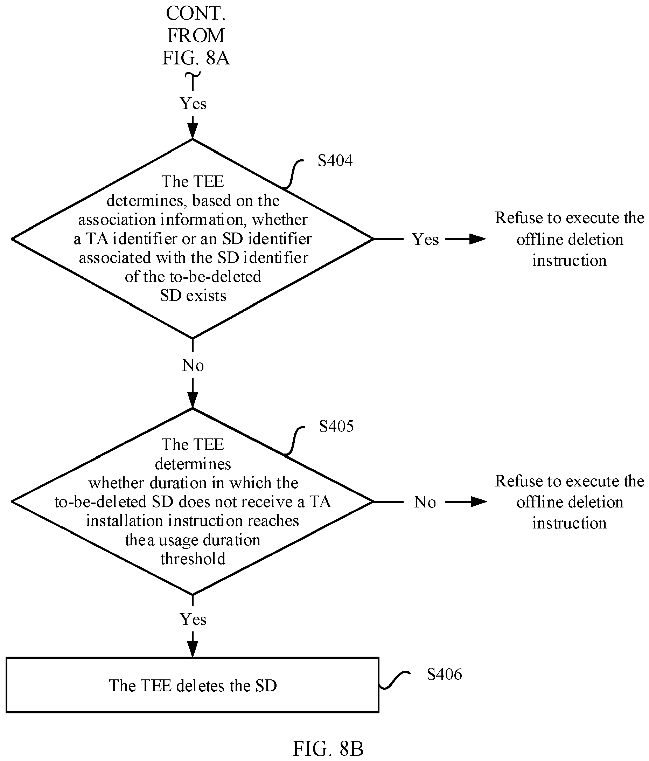

The following describes the technical solutions in the embodiments of the present invention with reference to FIG. 3 to FIG. 8A and FIG. 8B.

FIG. 3 is a schematic flowchart of an offline management instruction management method according to an embodiment of the present invention. As shown in FIG. 3, the management method may include the following steps.

S101. A TEE receives an offline management instruction sent by an REE.

After obtaining the offline management instruction from an application server, the REE of a terminal establishes a session with the TEE by using a client API or in another communication manner, and sends the offline management instruction to the TEE. Optionally, in this embodiment of the present invention, the offline management instruction may include but is not limited to installing an SD, installing a TA, updating the SD, updating the TA, deleting the SD, and deleting the TA.

The offline management instruction includes an offline management parameter. The offline management parameter may be included in a field in the offline management instruction. The field may be an extension field of an existing offline management instruction, or may be an extension field of an authorization token token. The offline management parameter may include at least one of a usage duration threshold and a usage quantity threshold.

S102. The TEE executes an offline management operation corresponding to the offline management instruction, and generates an offline management policy based on the offline management parameter.

In an embodiment of the present invention, after receiving the offline management instruction sent by the REE, the TEE performs integrity and offline authorization verification on the offline management instruction, and determines a use condition of another necessary instruction. For example, if the offline management instruction is an offline TAinstallation instruction, after performing integrity and offline authorization verification on the offline TA installation instruction, the TEE further determines whether a to-be-installed TA exists in the TEE, and whether the TEE has abundant space to install the TA, and verifies validity of a universal unique identifier (Universal Unique Identifier, UUID). The UUID is used to identify the SD and the TA, and the UUID may be constructed by using the RFC 4122 standard.

In this embodiment of the present invention, the terminal obtains the offline management instruction, and determines whether to execute the offline management instruction. For example, if the offline management instruction is an offline TA installation instruction, the terminal may determine, in two manners, whether to execute the offline TA installation instruction: 1. The REE determines, through a query interface provided by the TEE, whether a TA exists, and then determines whether to execute the offline TA installation instruction. 2. The REE sends the offline TA installation instruction to the TEE, and the TEE determines, based on association information, whether to execute the offline TA installation instruction.

A process in which the REE determines, through the query interface provided by the TEE, whether to execute the offline TA installation instruction may be specifically as follows: It is first determined whether a to-be-installed TA exists. If the to-be-installed TA exists, installation of the TA is terminated. If the to-be-installed TA does not exist, it is checked whether an SD corresponding to the to-be-installed TA exists. If the SD exists, an offline TA installation process is executed. If the SD does not exist, the SD is created, and then the TA is installed. The offline management instruction includes an SD creation instruction.

A process in which the REE sends the offline TA installation instruction to the TEE, and the TEE determines, based on the association information, whether the to-be-installed TA exists in the TEE may be specifically as follows: After receiving the offline TA installation instruction sent by the REE, the TEE determines, based on a TA identifier in the offline TA installation instruction, whether the TA is installed in the TEE. If the TA exists, installation of the TA is terminated. If the TA does not exist, it is further determined, based on an SD-T identifier in the offline TA installation instruction, whether an SD corresponding to the TA exists. If the SD exists, a use condition of the offline TA installation instruction is met, and an offline TA installation process is executed. If the SD does not exist, the SD is created, and then the TA is installed. The offline management instruction includes an SD creation instruction.

When authorization verification performed by the TEE on the offline management instruction succeeds and various conditions for executing the offline management instruction are met, the TEE executes the corresponding offline management operation based on the offline management instruction, and generates the offline management policy based on the offline management parameter in the offline management instruction.

In an embodiment of the present invention, when the offline management instruction is an offline SD installation instruction or an offline SD update instruction, and the offline management parameter may be a usage time threshold or a usage quantity threshold, the offline management policy generated by the TEE may be receiving, within the usage duration threshold or the usage quantity threshold, an offline TA installation instruction for installing the TA installation in the SD.

In another embodiment of the present invention, when the offline management instruction is an offline TA installation instruction or an offline TA update instruction, and the offline management parameter may be a usage time threshold or a usage quantity threshold, the offline management policy generated by the TEE may be performing a preset operation within the usage quantity threshold or the usage duration threshold.

In an embodiment of the present invention, the preset operation may be an online TA authentication process, that is, a process in which the TA and an OWE interact with each other and perform mutual authentication. Online TA authentication can achieve an effect of two-way authentication of the TEE and the OWE. The TEE may determine, through online authentication, that the offline installed TA truly needs to carry a specific service and a version meets a service requirement of the OWE. The OWE may verify validity of the TEE and the TA by using an online authentication process, to ensure that the TA is run in the valid TEE, and subsequently may perform service personalization configuration on the TA.

In an embodiment, the TA submits metadata of the TA, and/or a digest of data of the TA, and/or credential information of the TA, and/or a signature on TA-related data by the TEE to a server for authentication. After performing information confirming, the server completes online authentication on the TA, and sends an authentication result and/or a management instruction for updating a TA status to the TEE. For example, after a specific TAis installed, a service can be developed only after the server performs user registration and binding. In this case, the preset operation may be that after the TA succeeds in online verification by the server, and meets a service use condition such as a TA version condition and a TEE version condition, the server performs a user registration and binding process, so that the TA normally develops a service after registration and binding are completed. For an offline installed TA, if a verification process and a registration and binding process of the TA are not performed within the usage duration threshold or the usage quantity threshold that is specified in the offline management policy, the TEE determines that offline installation of the TA meets a scenario in which a TEE resource may be maliciously occupied, and deletes the TA.

In this embodiment of the present invention, the preset operation includes but is not limited to the online TA authentication. The preset operation may alternatively be another operation. Executing the operation according to specific management logic can ensure that the SD or the TA installed or updated according to the offline management instruction is an SD or a TA that meets a service use condition, or an SD or a TA that determines to carry a service.

Optionally, in an embodiment of the present invention, the TEE may install or update the TA in a preset SD according to the offline management instruction, and the preset SD is an existing SD or a temporarily created SD. For example, the offline management instruction is an offline TA installation instruction. When the TEE installs the TA by using the offline TA installation instruction, the TEE first installs the TA in the preset SD instead of SD-T corresponding to a target SD identifier included in the offline management instruction, in other words, does not directly associate the TA with SD-T indicated by the offline management instruction. In this way, the TEE can manage offline installed TAs together. The TEE stores a correspondence between the offline installed TA and SD-T. After online authentication is subsequently performed on the offline installed TA, the TA is "migrated" to SD-T indicated by the offline management instruction, in other words, information about association between the TA and SD-T is established.

In an embodiment of the present invention, after the TEE executes the offline management operation according to the offline management instruction, the TEE updates association information, and marks the SD or the TA that is installed offline according to the offline management instruction or the SD or the TA that is updated offline according to the offline management instruction as an offline state. That is, the TEE may perform marking in the association information, to distinguish between SDs or TAs that are installed/updated online and offline. Marking information may be automatically added by the TEE based on different installation/update manners, or may be generated by using the parameter in the offline management instruction. In an embodiment, whether the SD/TA is installed/updated offline may be determined by storing the offline management policy associated with the SD/TA in the association information. In an embodiment, the SD/TA may be marked as an offline state by setting a lifecycle state (lifecycle state) of the SD/TA. The TEE sets, in response to an instruction in the offline management instruction, the lifecycle state of the SD/TA that is installed/updated offline as an offline state. After performing online authentication, the OWE switches the lifecycle state of the SD/TA that is installed or updated offline to an active (Active, for the SD)/executable (executable, for the TA) state by using the management instruction. The offline lifecycle state may be a LOCK/Restricted state in an existing TMF standard and/or an extension thereof, or may be a lifecycle state newly added for an offline installation scenario. This is not limited in the present invention.

The association information includes a lifecycle state and an association relationship between the SD and the TA, that is, a correspondence between an SD installed in the TEE and a TA installed in the SD installed in the TEE. In this embodiment of the present invention, the association information may further record a correspondence between an offline management policy, an SD, and a TA. Optionally, in this embodiment of the present invention, the association information may be presented in a form of a table, and the association information may be a registry that is stored in the TEE and that records information about each SD and each TA.

In an embodiment, the offline management instruction instructs to install the TAin SD-T. When the TEE installs the offline installed TA in the preset SD, and updates the association information, the TEE records an association relationship between the TA, SD-T, the offline management policy, and the preset SD. When a CA in the REE initiates a query for the TA installed in SD-T, the CA may obtain information indicating that the TA is installed offline in the SD. However, in the TEE, both SD-T and the preset SD have management permission for the offline TA. When completing online authentication, the TA removes the association relationship between the offline management policy, the preset the SD, and the TA, and completely transfers the management permission to SD-T.

After S102, the TEE determines, based on a usage status of the SD or the TA that is installed or updated according to the offline management instruction, whether the offline management policy is met.

For example, the TEE obtains the usage status of the SD that is installed offline or updated offline, determines whether an offline TA installation instruction for installing a TA in the SD is received within the usage duration threshold or a usage quantity threshold that is specified in the offline management policy, and deletes the SD if the offline TA installation instruction is not received.

For another example, the TEE obtains the usage status of the TA that is installed offline or updated offline, determines whether a preset operation is performed within the usage duration threshold or a usage quantity threshold that is specified in the offline management policy, and deletes the TA if the preset operation is not performed. The preset operation may be an online authentication operation on the TA.

S103. When the usage status of the SD or the TA that is installed or updated according to the offline management instruction does not meet the offline management policy, the TEE deletes the SD or the TA that is installed or updated according to the offline installation instruction, or the TEE restores the SD or the TA to a state before update.

In this embodiment of the present invention, the usage status of the SD or the TA that is installed offline or updated offline may include a usage status such as a quantity of times that the SD or the TA is used/invoked and usage duration.

Optionally, the preset operation may be online authentication on the TA. After the offline TA is installed, the TEE detects and records a running status of the offline TA, and determines whether a usage status of the offline TA meets the offline management policy. If online authentication is not performed on the offline TA based on a requirement of the offline management policy, that is, the usage status of the TA does not meet the offline management policy: performing online authentication within the usage duration threshold or the usage quantity threshold, the TEE deletes the TA. If online authentication is performed on the offline TA before a usage status specified in the offline management policy, a limitation imposed on the TA based on the offline management policy is removed by using an online authentication process, and the TA that succeeds in the online authentication may be considered as a normal TA.

For example, when the offline management parameter is the usage quantity threshold, each time the TEE detects that the offline TA is invoked, the TEE increases a counter generated for the offline TA by 1. When the offline management policy indicates that online authentication needs to be performed before the TA is invoked for two times, the TEE determines the usage status of the TA based on the counter. When the TA is used for two times but online authentication is still not performed to remove the limitation imposed on the SD or the TA based on the offline management policy, the TEE deletes the TA.

When the offline management parameter is the usage quantity threshold, the TEE detects a running status of the TA based on an installation time recorded when the offline TA is installed, a trusted clock of the TEE, and a time requirement in the offline management policy, and determines whether the usage status of the TA meets the offline management policy.

Optionally, in an embodiment of the present invention, the management method may further include:
displaying, by the TEE, first prompt information on a screen of the terminal based on the recorded usage status of the offline installed or updated SD, where the first prompt information is used to prompt a user to install the TA in the offline installed or updated SD; or
displaying, by the TEE, second prompt information on a screen of the terminal based on the usage status of the offline installed or updated TA, where the second prompt information is used to prompt a user to trigger the preset operation.

In other words, the TEE may generate notification information on an interface (UI) on a TEE/REE side in an active prompt manner, to prompt the user to initiate an operation of installing the TA in the SD or an operation of online activation.

In another embodiment of the present invention, when the usage status of the SD or the TA that is installed or updated according to the offline management instruction does not meet the offline management policy, that is, if the offline updated SD does not receive, within the usage duration threshold or the usage quantity threshold that is specified in the offline management policy, an offline TA installation instruction for installing the TAin the SD, the offline updated SD is restored to a state before update; or if online TA authentication is not performed on the offline updated TA within the usage duration threshold or the usage quantity threshold that is specified in the offline management policy, the offline updated TA is restored to a state before update.

For example, for offline TA update, after obtaining a TA of a new version, the TEE does not delete code of a TA of an earlier version temporarily, but deletes the code of the TA of an earlier version only when a usage status of the TA of a new version meets the offline management policy; or the TA of a new version is deleted to restore to the TA of an earlier version when the TA of a new version does not meet the offline management policy.

The TEE provided in this embodiment of the present invention manages and controls the offline management operation based on the offline management policy, so that TEE has a capability of actively preventing a malicious application from occupying a TEE space resource, thereby avoiding problems such as a replay and a DoS attack, improving TEE resource utilization, and enhancing security in a TEE offline scenario.

Optionally, as shown in FIG. 3, the management method may further include the following step:
S104. When the usage status of the SD or the TA that is installed or updated by the TEE according to the offline management instruction meets the offline management policy, the TEE removes a limitation imposed on the offline installed SD, the offline installed TA, or the offline updated TA based on the offline management policy.

In this embodiment of the present invention, according to logic of processing an offline management procedure by the TEE, that the TEE removes a limitation imposed on the offline installed SD, the offline installed TA, or the offline updated TA based on the offline management policy may include one of the following cases:
1. The TEE deletes the offline management policy. For example, the TEE deletes, from the association information, a mark of the offline installed or updated SD/TA that is marked based on the offline management policy.
2. The TEE cancels the mark indicating that the SD or the TA that is installed or updated according to the offline management instruction is in an offline state. For example, the TEE cancels a mark that is automatically generated when the SD/TA that is installed or updated according to the offline management instruction.
3. The TEE modifies, based on a result of the online authentication performed by the OWE on the TA/SD or in response to an online management instruction that is sent by the OWE after the OWE performs online authentication on the TA/SD, the offline lifecycle state that is in the association information and that corresponds to the SD or the TA that is installed or updated according to the offline management instruction into an executable state. For example, the TEE modifies a mark of the offline installed or updated SD/TA that is marked based on the lifecycle state.

In an embodiment of the present invention, modifying the offline lifecycle state in the association information into an executable state may be switching a lifecycle that runs in a limited manner to a lifecycle that can run normally. The lifecycle that can run normally herein means that the TEE resource can be normally invoked with permission, and invoking of the CA can be normally responded to.

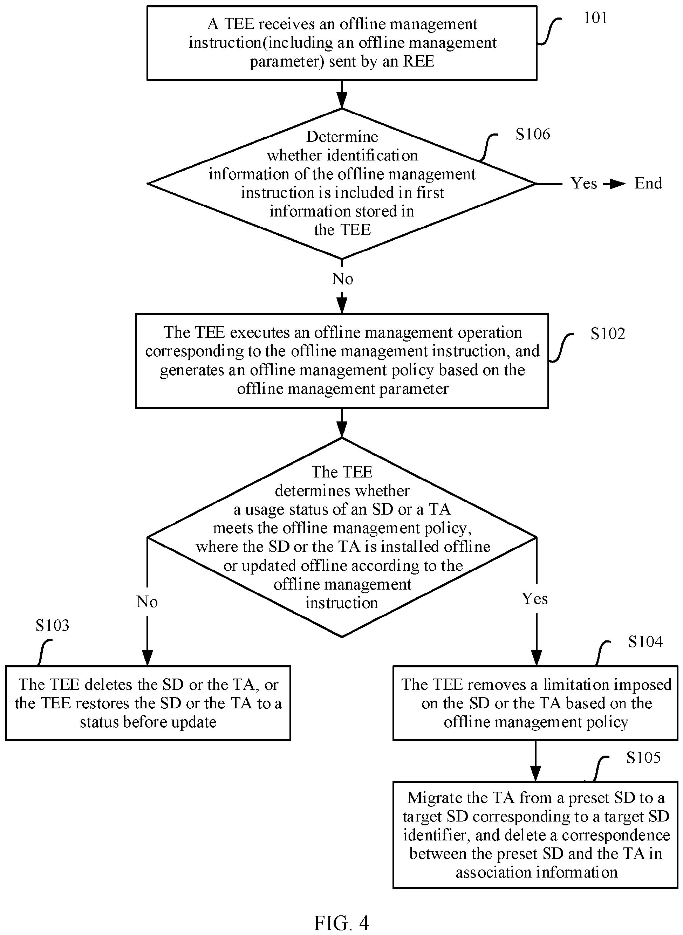

Optionally, as shown in FIG. 4, in an embodiment of the present invention, when the TEE executes the offline management operation according to the offline management instruction, for example, installs the TA in the preset SD offline, the management method may further include the following step:
S105. The TEE migrates the offline installed or updated TA from the preset SD to a target SD corresponding to the target SD identifier, and deletes a correspondence between the preset SD and the offline installed or updated TA in the association information.

It should be noted that serial numbers in this embodiment of the present invention merely represent a logical implementation, and does not represent all implementations. S104 and S105 may be simultaneously performed, or may be separately performed in this embodiment of the present invention. This is not limited.

Optionally, in an embodiment of the present invention, before the usage status of the offline installed or updated SD/TA meets the offline management policy, the management method may further include:

The TEE limits resource access permission of the offline installed or updated SD or TA. For example, before online authentication is performed on the offline installed TA, a TEE resource that can be accessed by the TA may be limited, to prevent the TEE from being attacked by using a vulnerable TA of an earlier version that is installed offline. For example, the offline installed TA is restricted from invoking computing and storage resources of the TEE or initiating access to another TA or TEE API.

In this embodiment of the present invention, the TEE has a capability of restricting or allowing the resource access permission of the offline installed or updated SD/TA. Permission information may be set in the offline management instruction, to indicate to restrict or allow the resource access permission of the offline installed or updated. Alternatively, the TEE manages, based on preset logic, the resource access permission of the offline installed or updated SD/TA.

Optionally, in this embodiment of the present invention, as shown in FIG. 4, before the TEE executes the offline management operation according to the offline management instruction, the management method may further include the following step:
S106. Determine whether identification information of the offline management instruction is included in first information stored in the TEE.

The first information includes identification information of an offline management instruction that the TEE refuses to execute. In this embodiment of the present invention, the first information may also be referred to as a blacklist. Use of the offline management instruction is limited by maintaining the blacklist.

The identification information in the offline management instruction may include at least one of an identifier of the offline management instruction, a digest of the offline management instruction, and an identifier of an SD or a TA that needs to be managed offline according to the offline management instruction, or other information that can identify the offline management identifier is used. This is not limited in this embodiment of the present invention.

When the TEE determines that the identification information included in the offline management instruction is not included in the first information stored in the TEE, S 102 is performed; otherwise, execution of the offline management instruction is canceled.

Optionally, in an embodiment of the present invention, when the usage status of the offline installed or updated SD/TA does not meet the offline management policy, for example, when a quantity of times that the SD or the TA that is installed or updated by using the offline management instruction is deleted by the TEE reaches a preset threshold, the TEE adds the identification information of the offline management instruction to the first information.

For example, when a usage status of a TA 1 does not meet the offline management policy, the TEE may delete the TA 1 based on the usage status of the offline TA 1 and the offline management policy. The TEE records information about a TA/an SD that is deleted because the offline management policy is not met. When the TA 1 is repeatedly installed and a quantity of times that the TA 1 is deleted because the usage status of the TA 1 does not meet the offline management policy reaches a preset threshold that is set by the TEE, the TEE identifies, based on the preset threshold, that the offline management instruction for installing the TA 1 may be maliciously used, deletes the offline installed TA, and places the offline TA or the offline TA installation instruction on a blacklist to reject subsequent execution of the offline TA 1 installation instruction.

Optionally, in an embodiment of the present invention, when the TEE needs to clear and release storage space, the offline installed or updated SD/TA may be preferentially deleted. The TEE may delete, based on a usage status of a TA marked as an offline state, an offline installed or updated TA that meets a preset space clearing condition, and release the storage space.

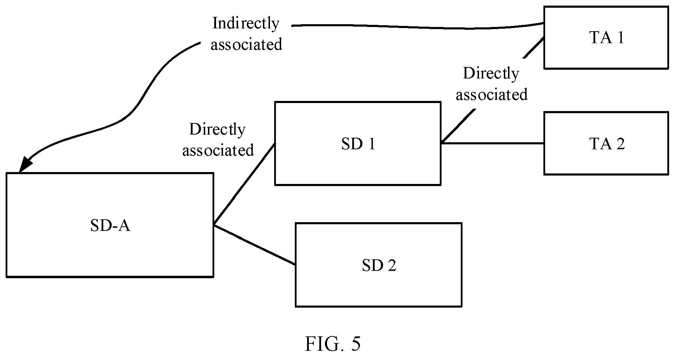

According to the offline management instruction provided in FIG. 3 and FIG. 4, for an SD that receives the offline management instruction, as long as SD-A indicated by a token (token) is in a direct association or indirect association relationship with SD-A, and verification can be performed on the authorized token by using a verification key in SD-A, after the verification succeeds, the SD can perform a management operation indicated by the offline management instruction. For example, in FIG. 5, an SD-2 performs an operation of installing a TA in an SD-1, and after verification is performed on the token by SD-A, the offline management operation corresponding to the offline management instruction can be performed.

It can be learned that a current access control mechanism cannot prevent the offline management instructions from being maliciously used in this case. Even if the CA that can access the SD/TA can be limited by using the client API, as long as a valid instruction can be sent to any SD that is directly or indirectly associated with SD-A and a use condition is met, the instruction can be executed, and consequently the valid offline management instruction may still be maliciously used by the CA.

Therefore, the present invention further provides an offline management instruction management method. By binding an offline management instruction to a valid user of the offline management instruction, a specific offline management instruction can be executed only when the offline management instruction is sent by a specified CA or an authorized CA (a valid user) to the TEE, so as to further limit a use condition of the offline management instruction, thereby avoiding a case in which the offline management instruction is obtained by an unauthorized CA and maliciously used.

When generating the offline management instruction, the OWE adds an identifier of a user of the offline management instruction to the offline management instruction, and binds the offline management instruction to the user of the offline management instruction.

For example, when generating an offline TA installation instruction 1, the OWE may use identification information of a client A or a client B as an element of the offline installation instruction, so that only the client A or the client B can use the instruction to install the TA offline.

In this embodiment of the present invention, the identifier of the user of the offline management instruction may be information that can uniquely identify an identity of the CA, for example, a package name of the CA, a certificate or certificate hash of the APK, or a public key of the APK. The identifier of the user of the offline management instruction may be used as a parameter of the token, or may be used as a parameter of the offline management instruction at an operation layer. The identifier of the user of the offline management instruction may be set in an extension field of the offline management instruction. This is not limited in this embodiment of the present invention.

After generating the offline instruction, the OWE may place the offline instruction in the application server in the manner in FIG. 1. For a specific process, refer to the description in FIG. 1. For brevity, details are not described herein again. The terminal needs to obtain the offline management instruction from the application server.

It should be noted that "first", "second", and "third" mentioned in this embodiment of the present invention are merely used to distinguish between information, and do not limit the information.

The solution provided in this embodiment of the present invention may be applied to the management method shown in FIG. 3 and FIG. 4, that is, may be applied after the TEE receives the offline management instruction sent by the CA in the REE and before the TEE executes the offline management operation corresponding to the offline management instruction.

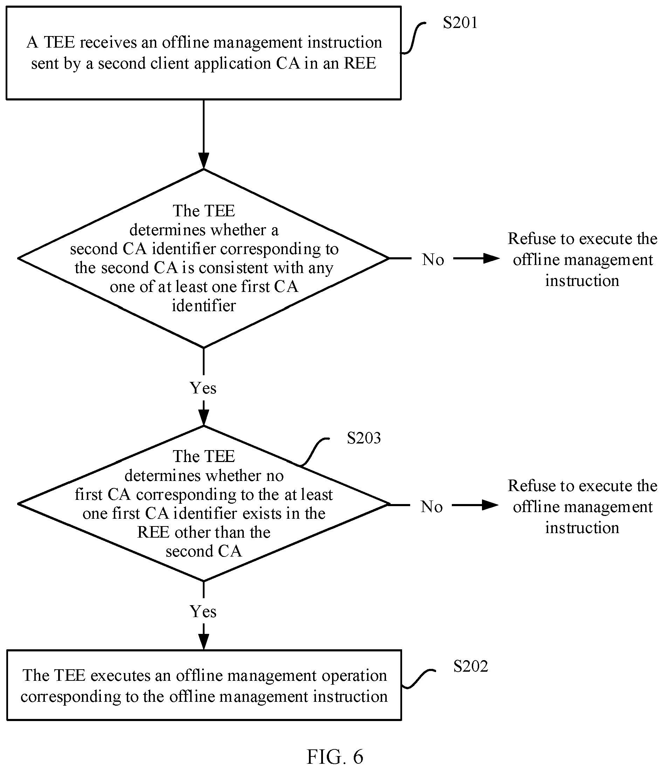

As shown in FIG. 6, the management method may include the following steps.

S201. A TEE receives an offline management instruction sent by a second client application CA in an REE.

The offline management instruction includes at least one first CA identifier corresponding to at least one first CA that is allowed to use the offline management instruction.

After obtaining the offline management instruction, the REE of a terminal sends the offline management instruction to the TEE by using a client Client API or in another communication manner. When receiving the offline management instruction sent by the CA in the REE, the TEE obtains a CA identifier of a user CA that establishes a session with the TEE.

Optionally, the TEE may obtain, through extraction at a system bottom layer such as a Linux Kernel layer or by using another security technology, the CA identifier corresponding to the CAthat sends the offline management instruction, to reduce a risk of forging a user identity.

After S201, the TEE verifies whether a second CA identifier corresponding to the second CA is consistent with any one of the at least one first CA identifier.

S202. When the second CA identifier is consistent with the any one of the at least one first CA identifier, the TEE executes an offline management operation corresponding to the offline management instruction.

When the identifier of the CAthat sends the offline management instruction is inconsistent with an identifier, in the offline management instruction, of a CA that is authorized to use the offline management instruction, the management operation is rejected, and an error code is returned.

For example, the second CA is a CA 1, and the at least one first CA identifier included in the offline management instruction includes an identifier of a CA 1 and an identifier of a CA 2. After the CA 1 in the REE sends the offline management instruction to the TEE, the TEE compares an identifier of the CA 1 that sends the offline management instruction with each of the identifier of the CA 1 authorized to use the offline management instruction and the identifier of the CA 2, where the identifier of the CA 1 and the identifier of the CA 2 are included in the offline management instruction. When the identifier of the CA 1 that sends the offline management instruction is consistent with the identifier, in the offline management instruction, of the CA 1 authorized to use the offline management instruction, the TEE determines that the CA 1 that sends the offline management instruction has permission to use the offline management instruction, and the TEE executes the offline management instruction.

In this embodiment of the present invention, the CA identifier may be verified by using a common PKI mechanism. To be specific, an OWE separately signs the offline management instruction and an application data packet (for example, an Android APK or an iOS IPA packet). When the CA on the REE side sends the offline management instruction to the TEE, the TEE verifies signers of the offline management instruction and the application data packet, to ensure that the offline management instruction and the application data packet are signed by a same OWE, thereby proving that the OWE authorizes the CAto use the offline management instruction.

Alternatively, the OWE signs the APK, and adds, to the offline management instruction, a public key used to verify the signature. After receiving the offline management instruction, the TEE extracts the public key of the OWE to verify the signature of the user application data packet, to confirm that the OWE authorizes the CAto use the offline management instruction.

In this embodiment of the present invention, the first CA identifier and the second CA identifier may be at least one of a name of a CA data packet, a CA data packet certificate, a digest of a CA data packet certificate, a public key of a CA data packet issuer, or other unique CA identification information (such as a UUID), for example, a CA package name, an APK certificate, a digest of an APK certificate, or a public key of an APK issuer.

The first CAidentifier may be used as an element in the offline management instruction, and may be included in an offline management parameter, or may be included in an extension field of the offline management instruction, or may be included in a token.

Optionally, in this embodiment of the present invention, the offline management instruction is an offline deletion instruction. After the TEE determines that the second CA identifier corresponding to the second CA is consistent with the any one of the at least one first CA identifier, the management method further includes the following step:
S203. When the TEE determines that no first CA corresponding to the at least one first CA identifier exists in the REE other than the second CA, the TEE executes the offline management operation corresponding to the offline management instruction. When the TEE determines that any one of the first CA corresponding to the at least one first CA identifier exists in the REE in addition to the second CA, the TEE refuses to execute the offline management instruction.

For example, the CA 1 in the REE sends the offline management instruction, and the offline management instruction includes an identifier of a CA 1, an identifier of a CA 2, and an identifier of a CA 3. It indicates that the CA 1, the CA 2, and the CA 3 are authorized to use the offline management instruction. This also implicitly means that the three CAs in the REE need to use a TA (or need to have a service dependency relationship with the TA). When the TEE determines that the REE includes only the CA 1 in the CA 1, the CA 2, and the CA 3, the TEE executes the management operation corresponding to the offline management instruction. When the REE further includes either the CA 2 or the CA 3 in addition to the CA 1, that is, the REE further includes a CA that needs to use the TA in addition to the CA 2, the TEE refuses to execute the offline management instruction.

In an embodiment of the present invention, the offline management instruction may be an offline deletion instruction, including an offline SD deletion instruction and an offline TA deletion instruction.

For example, the offline deletion instruction is an offline TA deletion instruction, and the offline TA deletion instruction may include a TA identifier of a to-be-deleted TA and the at least one first CA identifier authorized to use the offline management instruction.

After a TA is installed according to the offline management instruction, when the offline TA deletion instruction is used to delete the TA, the TEE obtains CA information in the REE, and the TEE determines, based on at least one third CA identifier obtained and recorded according to the offline TA installation instruction or from the offline installed TA, whether none of at least one third CA that corresponds to the at least one third CA identifier and that can use the TA exists in the REE. When any third CA exists, it indicates that there is a CA that needs to use the TA, and the TA cannot be deleted. In other words, a condition for deleting the TA offline is not met, and an operation of deleting the TA is rejected. The third CA identifier may be a CA identifier that is included in the offline TA installation instruction used to install the TA offline and that corresponds to one, two, or more CAs that are authorized to use the offline TA installation instruction when the TA is installed offline, and a CA identifier corresponding to a CA that is recorded in the offline installed TA and that can be used by a specific CA for the TA. For example, the at least one third CA identifier may be identifiers of a CA 1, a CA 2, and a CA 5 that are authorized to use the offline TA installation instruction, and identifiers of a CA 1, a CA 2, a CA 3, a CA 4, and a CA 5 that can be used by the specific CA 1, the specific CA2, the specific CA 3, the specific CA 4, and the specific CA 5 that are recorded in the TA.

Optionally, in an embodiment of the present invention, the offline TA deletion instruction includes an offline management parameter, the offline management parameter includes a usage duration threshold, and when none of the at least one CA that corresponds to the at least one third CA identifier and that is allowed to use the TA exists in the REE, the TEE deletes the TA when determining that minimum duration in which the at least one third CA corresponding to the at least one third CA identifier does not exist in the REE exceeds the usage duration threshold. A timing manner of the minimum duration herein is that timing starts when no third CA exists in the REE, that is, timing starts when the last third CA in the at least one third CA is deleted.

In this embodiment of the present invention, the CA sends the offline management instruction to the TEE in advance, and the TEE caches the offline management instruction, and can obtain a usage change status of the CA in the REE. The TEE obtains, from the offline deletion instruction, information about a CA that is allowed to use the offline deletion instruction, or obtains, from the TA, information about all CAs that need to use the TA. When all the CAs that need to use the TA are deleted, the TEE records a CA deletion event and a deletion time. When the last CA in the CAs in the offline management instruction is deleted, that is, none of CAs corresponding to all CA identifiers exists, the TEE starts timing. When a usage duration threshold is reached, and the deleted CA is not installed within a time range of the usage duration threshold, the TEE determines that the deleted CA is permanently deleted and is no longer used. In this case, the TEE deletes the TA.

For example, the at least one third CA identifier is identifiers of a CA 1, a CA 2, a CA 3, a CA 4, and a CA 5. After the TEE caches the offline TA deletion instruction, the TEE determines whether the CA 1, the CA 2, the CA 3, the CA 4, and the CA 5 still exist in the REE, and when none of the CA 1, the CA 2, the CA 3, the CA 4, and the CA 5 exists in the REE, executes the offline TA deletion instruction.

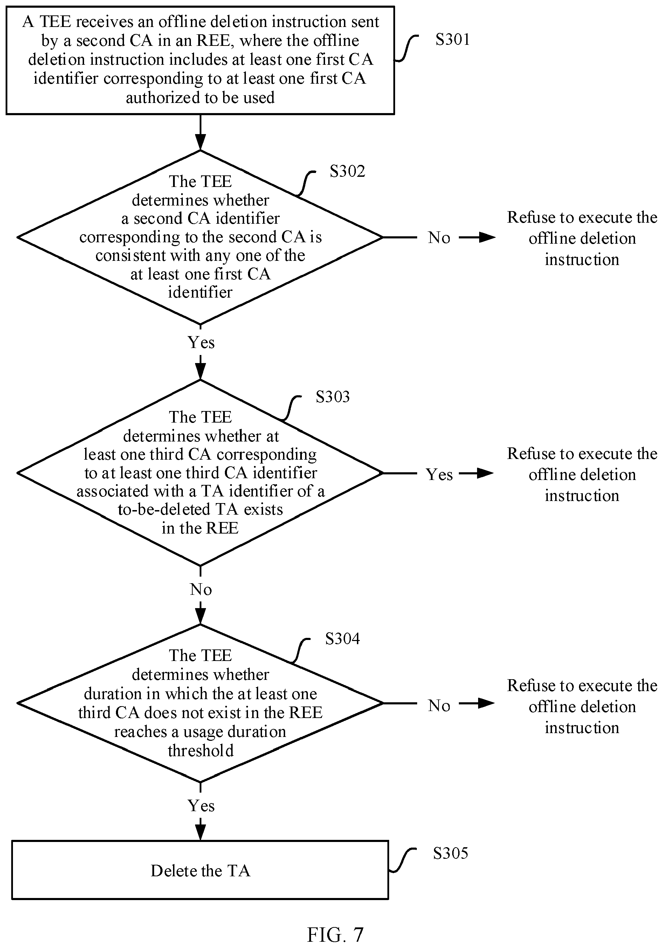

In an embodiment of the present invention, as shown in FIG. 7, the management method may include the following steps.

S301. A TEE receives an offline deletion instruction sent by a second CA in an REE.

The offline deletion instruction includes a TA identifier of a to-be-deleted TA, at least one CA identifier authorized to use the offline TA deletion instruction, and an offline management parameter. Optionally, in this embodiment of the present invention, the offline management parameter may include a usage duration threshold.

S302. The TEE determines whether a second CA identifier corresponding to the second CA is consistent with any one of at least one first CA identifier.

When the second CA identifier corresponding to the second CA is consistent with the any one of the at least one first CA identifier, S303 is performed; otherwise, an offline management operation corresponding to the offline deletion instruction is rejected.

S303. The TEE determines whether at least one third CA corresponding to at least one third CA identifier associated with the TA identifier of the to-be-deleted TA exists in the REE.

The at least one third CA is a CA that can use the TA. The at least one third CA identifier is an identifier that corresponds to the at least one third CA allowed to use the TA and that is obtained and recorded by the TEE according to the offline TA installation instruction or from the offline installed TA.

The TEE records a usage status of a CA in the REE, and determines, based on the at least one third CA identifier, whether the REE further includes at least one CA corresponding to the at least one third CA identifier. When none of the at least one third CA exists in the REE, S304 is performed; otherwise, the offline deletion instruction is rejected.

S304. The TEE determines whether duration in which the at least one third CA does not exist in the REE reaches the usage duration threshold.

In an embodiment of the present invention, timing starts when none of the at least one third CA exists in the REE, and when the duration in which the at least one third CA does not exist in the REE reaches the usage duration threshold, the offline deletion instruction is executed, that is, S305 is performed; otherwise, the offline deletion instruction is rejected.

S305. The TEE deletes the TA.

For example, a CA 1 in the REE sends an offline TA deletion instruction, and the offline TA deletion instruction includes identifiers of a CA 1 and a CA 5 that are authorized to use the offline TA deletion instruction. After receiving the offline TA deletion instruction sent by the CA 1, the TEE determines whether an identifier of the CA 1 that sends the offline TA deletion instruction is consistent with the identifier, included in the offline TA deletion instruction, of one of the CA 1 and the CA 5 that are authorized to use the offline TA deletion instruction. When the identifier of the CA 1 is consistent with the identifier of one of the CA 1 and the CA 5, the TEE determines whether the third CA (a CA 1, a CA 2, a CA 3, a CA 4, and a CA 5) that corresponds to the at least one third CA identifier and that can use the TA is still in the REE. When none of the CA 1, the CA 2, the CA 3, the CA 4, and the CA 5 is in the REE, the TEE further determines whether duration in which none of the CA 1, the CA 2, the CA 3, the CA 4, and the CA 5is in the REE reaches the usage duration threshold, for example, one hour. Optionally, the TEE deletes the TA when the last CA in the CA 1, the CA 2, the CA 3, the CA 4, and the CA 5 is not in the REE for one hour.

Optionally, in an embodiment of the present invention, the offline management instruction further includes indication information used to indicate to synchronously delete an SD associated with a to-be-deleted TA. If the SD associated with the to-be-deleted TA does not include another TA after the TA is deleted, the SD is deleted. In this embodiment of the present invention, the indication information in the offline management instruction may be a boolean bit newly added according to the instruction.

In another embodiment of the present invention, the TEE does not perform an offline deletion operation according to the offline deletion instruction.

For example, when the TEE determines that a CA that installs a TA offline is deleted, the TEE deletes the TA. Alternatively, when the TEE determines that no first CA corresponding to at least one first CA identifier exists in the REE, the TEE deletes the TA. The at least one first CA identifier is a CA identifier that is included in an offline TA installation instruction for installing a TA offline and that corresponds to one, two, or more CAs that are authorized to use the offline TA installation instruction. Alternatively, when the TEE determines that no third CA corresponding to the at least one third CA identifier exists in the REE, the TEE deletes the TA. The at least one third CA identifier is obtained and recorded by the TEE according to the offline TA installation instruction or from the offline installation TA.

For example, when a condition for automatically deleting the TA by the TEE is performing determining based on at least one CA identifier, when the TEE determines, based on a change status of a CA in the REE and at least one CA identifier that corresponds to the at least one CA installing the TA offline and that is stored in the TEE, the TEE determines whether the at least one CA corresponding to the at least one CA identifier still exists in the REE. When none of the at least one CA corresponding to the at least one CA identifier exists in the REE, the TEE automatically deletes the TA. For example, the TEE stores the at least one first CA identifier in the offline management instruction. To be specific, a CA 1, a CA 2, and a CA 3 are authorized to install a TA offline by using the offline installation instruction. For example, after the CA 1 uses the offline management instruction, and the TEE installs the TA offline, the TEE determines whether the CA 1, the CA 2, and the CA 3 still exist in the REE. When none of the CA 1, the CA 2, and the CA 3 that installs the TA offline exists in the REE, the TEE deletes the TA.

In another embodiment of the present invention, the offline deletion instruction may alternatively be an SD deletion instruction, and the SD deletion instruction may include an SD identifier of a to-be-deleted SD and the at least one first CA identifier. The TEE stores association information including a correspondence between a TA identifier and an SD.

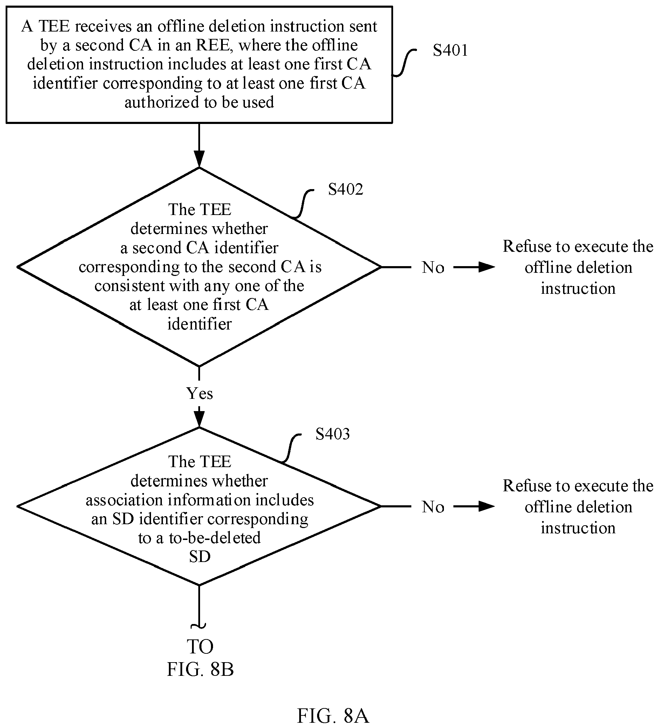

In an embodiment of the present invention, as shown in FIG. 8A and FIG. 8B, the management method may include the following steps.

S401. A TEE receives an offline deletion instruction sent by a second CAin an REE.

The offline deletion instruction includes an SD identifier of a to-be-deleted SD and at least one first CA identifier corresponding to at least one first CA authorized to use the offline deletion instruction. Optionally, in this embodiment of the present invention, the offline deletion instruction may further include an offline management parameter, and the offline management parameter may include a usage duration threshold.

S402. The TEE determines whether a second CA identifier corresponding to a second CA is consistent with any one of the at least one first CA identifier.

When the second CA identifier corresponding to the second CA is consistent with the any one of the at least one first CA identifier, S403 is performed; otherwise, an offline deletion operation corresponding to the offline deletion instruction is rejected.

S403. The TEE determines, based on association information, whether the TEE includes an SD identifier corresponding to a to-be-deleted SD.

When the TEE includes the SD identifier corresponding to the to-be-deleted SD, S404 is performed; otherwise, the offline deletion operation corresponding to the offline deletion instruction is not performed.

S404. The TEE determines, based on the association information, whether a TA identifier or an SD identifier associated with the SD identifier of the to-be-deleted SD exists.

When no TA associated with the SD exists in the SD, S405 is performed; otherwise, the offline deletion operation corresponding to the offline deletion instruction is rejected.

S405. The TEE determines whether duration in which the to-be-deleted SD does not receive a TA installation instruction reaches the usage duration threshold.

Optionally, the TEE determines whether duration from a moment at which the to-be-deleted SD is installed to a moment at which the TA installation instruction is not received reaches the usage duration threshold. When the duration from the moment at which the to-be-deleted SD is installed to the moment at which the TA installation instruction is not received reaches the usage duration threshold, no other TA is installed in the to-be-deleted SD, and no TA or SD is associated with the to-be-deleted SD, S406 is performed; otherwise, the offline deletion operation corresponding to the offline deletion instruction is rejected.

S406. The TEE deletes the SD.

For example, a CA 1 in the REE sends an offline SD deletion instruction, and the offline SD deletion instruction includes identifiers of a CA 1 and a CA 5 that are authorized to use the offline SD deletion. After receiving an offline TA deletion instruction sent by the CA 1, the TEE determines whether an identifier of the CA 1 that sends the offline TA deletion instruction is consistent with an identifier, included in the offline SD deletion instruction, of one of the CA 1 and the CA 5 that are authorized to use the offline SD deletion instruction. When the identifier of the CA 1 is consistent with the identifier of one of the CA 1 and the CA 5, the TEE determines, based on the association information, whether the TEE includes an SD identifier corresponding to an SD to be deleted according to the offline SD deletion instruction. When the association information includes the SD identifier of the to-be-deleted SD, the TEE determines, based on the association information, whether a TA or an SD associated with the SD exists in the SD. For example, the TA associated with the to-be-deleted SD may include a TA 1, a TA 2, and a TA 3. When identifiers of the TA 1, the TA 2, and the TA 3 that correspond to the SD identifier do not exist in the association information, the TEE further determines whether duration in which the offline TA installation instruction for installing a TA offline in the SD is not received meets the usage duration threshold. That is, optionally, when duration from the time when the SD is installed offline to the time when the duration is determined meets the usage duration threshold, the SD is deleted. The association information is information that is about a correspondence between an SD and a TA and that is stored in the TEE.

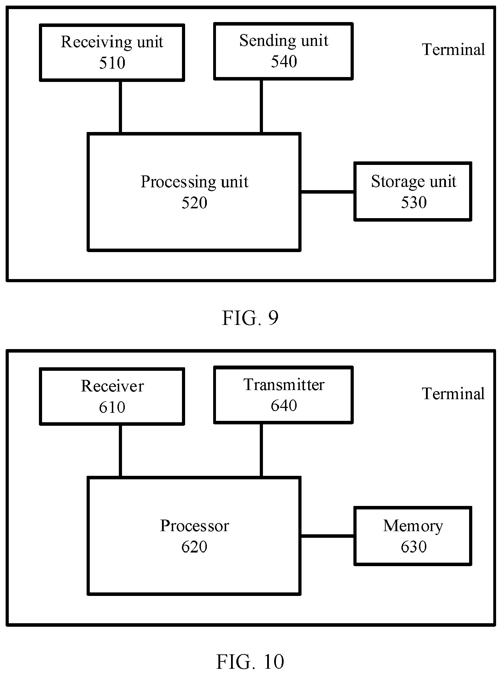

FIG. 9 is a schematic structural diagram of a terminal according to an embodiment of the present invention. As shown in FIG. 9, the terminal includes a trusted execution environment TEE and a rich execution environment REE. The TEE includes a receiving unit 510 and a processing unit 520.

The receiving unit 510 is configured to receive an offline management instruction sent by the rich execution environment REE of the terminal, where the offline management instruction includes an offline management parameter, and the offline management parameter includes at least one of a usage duration threshold and/or a usage quantity threshold.

The processing unit 520 is configured to: execute an offline management operation corresponding to the offline management instruction, and generate an offline management policy based on the offline management parameter.

When a usage status of a security domain SD or a trusted application TA does not meet the offline management policy, the processing unit 520 deletes the SD or the TA, or restores the SD or the TA to a status before update, where the SD or the TA is installed or updated offline by the TEE according to the offline management instruction.

Optionally, in an embodiment of the present invention, the offline management instruction includes an offline SD installation instruction or an offline SD update instruction, and the offline management policy is receiving an offline TA installation instruction within the usage quantity threshold or the usage duration threshold.

Optionally, in another embodiment of the present invention, the offline management instruction includes an offline TA installation instruction or an offline TA update instruction, and the offline management policy is performing a preset operation within the usage quantity threshold or the usage duration threshold.

Optionally, in an embodiment of the present invention, the processing unit 520 is further configured to determine whether identification information of the offline management instruction is included in first information stored in the TEE, where the first information includes identification information of an offline management instruction that the TEE refuses to execute.

Optionally, in an embodiment of the present invention, the processing unit 520 is further configured to add the identification information of the offline management instruction to the first information when a quantity of times that the SD or the TA is deleted by the TEE reaches a preset threshold.

Optionally, in an embodiment of the present invention, the identification information includes at least one of an identifier of the offline management instruction, a digest of the offline management instruction, and an identifier of an SD or a TA that needs to be managed offline according to the offline management instruction.

Optionally, in an embodiment of the present invention, that a processing unit 520 executes an offline management operation corresponding to the offline management instruction includes:
the processing unit 520 installs the TA offline or updates the TA offline in a preset SD according to the offline management instruction.

Optionally, in an embodiment of the present invention, the processing unit 520 is further configured to: update association information, and mark the SD or the TA as an offline state, where the association information includes a correspondence between an SD installed in the TEE and a TA installed in the SD installed in the TEE.

Optionally, in an embodiment of the present invention, when the usage status of the SD or the TA meets the offline management policy, the processing unit 520 removes a limitation imposed on the SD or the TA based on the offline management policy.

Optionally, in an embodiment of the present invention, that the processing unit 520 removes a limitation imposed on the SD or the TA based on the offline management policy includes:
the processing unit 520 deletes the offline management policy; or the processing unit 520 cancels the mark indicating that the SD or the TA is in an offline state; or the processing unit 520 modifies a lifecycle state corresponding to the SD or the TA into an executable state.

Optionally, in an embodiment of the present invention, the offline management instruction further includes a target SD identifier.

When the usage status of the TA meets the offline management policy, the processing unit 520 migrates the TA from the preset SD to a target SD corresponding to the target SD identifier, and deletes a correspondence between the preset SD and the TA in the association information.

Optionally, in an embodiment of the present invention, the processing unit 520 is further configured to: before the usage status of the SD or the TAmeets the offline management policy, limit resource access permission of the SD or the TA.

Optionally, in an embodiment of the present invention, the processing unit 520 is further configured to display first prompt information on a screen of the terminal based on the usage status of the SD; or
the processing unit 520 is further configured to display second prompt information on a screen of the terminal based on the usage status of the TA.

Optionally, in an embodiment of the present invention, the offline management instruction further includes at least one first client application CA identifier, and the at least one first CA identifier is an identifier corresponding to at least one first CA that is allowed to use the offline management instruction; and that the receiving unit 510 is configured to receive an offline management instruction sent by the rich execution environment REE of the terminal includes:
the receiving unit 510 receives an offline management instruction sent by a second CA in the REE; and
the processing unit 520 is further configured to: before the processing unit 520 executes the offline management operation corresponding to the offline management instruction, execute the offline management operation corresponding to the offline management instruction when determining that a second CA identifier corresponding to the second CA is consistent with any one of the at least one first CA identifier.

Optionally, in an embodiment, the offline management instruction is an offline deletion instruction. The processing unit 520 is further configured to: after the processing unit: after the processing unit determines that the second CA identifier corresponding to the second CA is consistent with the any one of the at least one first CA identifier, execute the offline management instruction when determining that no first CA corresponding to the at least one first CA identifier exists in the REE other than the second CA.

Optionally, in this embodiment of the present invention, the offline management instruction further includes indication information, and the indication information is used to indicate to synchronously delete the SD in which the TA is located.

That the processing unit 520 deletes the TA includes:
when determining that no associated TA exists in the SD in which the TA is located, the processing unit 520 deletes the TA and the SD in which the TA is located.

Optionally, in another embodiment of the present invention, the offline management instruction includes the offline TA installation instruction.

The processing unit 520 is further configured to: after the processing unit 520 executes the offline management operation corresponding to the offline management instruction, delete the TA when determining that no third CA corresponding to at least one third CA identifier exists in the REE.

The at least one third CA identifier is at least one third CA identifier obtained and recorded by the TEE according to the offline TA installation instruction for installing the TA offline or from the offline installed TA, and the at least one third CA corresponding to the at least one third CA identifier is a CA in which the REE needs to use the TA; the offline TA installation instruction includes at least one first CAidentifier, and the at least one first CA identifier is an identifier corresponding to at least one first CA authorized to use the offline TA installation instruction; and the at least one third CA includes the at least one first CA identifier.

Optionally, the terminal provided in this embodiment of the present invention further includes a storage unit 530, configured to store an instruction and data. The processing unit 520 is configured to: invoke the instruction in the storage unit 530, and perform a corresponding operation. Optionally, the terminal further includes a sending unit 540, configured to transmit data to another device.

Functions of the function units of the terminal may be implemented by steps performed by the terminal in the embodiments shown in FIG. 3 to FIG. 8A and FIG. 8B. Therefore, a specific working process of the terminal provided in this embodiment of the present invention is not described herein again.

An embodiment of the present invention further provides a terminal. As shown in FIG. 10, the terminal includes a receiver 610, a processor 620, a memory 630, and a transmitter 640. The receiver, the transmitter, the processor, and the memory are connected to each other, and are configured to complete mutual communication. The terminal has a function of performing the method performed by the terminal in FIG. 3 to FIG. 8A and FIG. 8B.

The terminal is configured to perform the following operations:

The receiver 610 is configured to receive an offline management instruction sent by a rich execution environment REE of the terminal, where the offline management instruction includes an offline management parameter, and the offline management parameter includes at least one of a usage duration threshold and/or a usage quantity threshold.

The processor 620 is configured to: execute an offline management operation corresponding to the offline management instruction, and generate an offline management policy based on the offline management parameter.

When a usage status of a security domain SD or a trusted application TA does not meet the offline management policy, the processor deletes the SD or the TA, or the processor 620 restores the SD or the TA to a status before update, where the SD or the TAis installed or updated offline by the TEE according to the offline management instruction.

Optionally, in an embodiment of the present invention, the offline management instruction includes an offline SD installation instruction or an offline SD update instruction, and the offline management policy is receiving an offline TA installation instruction within the usage quantity threshold or the usage duration threshold.

Optionally, in an embodiment of the present invention, the offline management instruction includes an offline TA installation instruction or an offline TA update instruction, and the offline management policy is performing a preset operation within the usage quantity threshold or the usage duration threshold.

Optionally, in an embodiment of the present invention, the processor 620 is further configured to determine whether identification information of the offline management instruction is included in first information stored in the TEE, where the first information includes identification information of an offline management instruction that the TEE refuses to execute.

Optionally, in an embodiment of the present invention, the processor 620 is further configured to add the identification information included in the offline management instruction to the first information when a quantity of times that the SD or the TA is deleted by the TEE reaches a preset threshold.

Optionally, in an embodiment of the present invention, the identification information includes at least one of an identifier of the offline management instruction, a digest of the offline management instruction, and an identifier of an SD or a TA that needs to be managed offline according to the offline management instruction.

Optionally, in an embodiment of the present invention, that the processor 620 executes an offline management operation corresponding to the offline management instruction includes:
the processor 620 installs the TA offline or updates the TA offline in a preset SD according to the offline management instruction.

Optionally, in an embodiment of the present invention, the processor 620 is further configured to: update association information, and mark the SD or the TA as an offline state, where the association information includes a correspondence between an SD installed in the TEE and a TA installed in the SD installed in the TEE.

Optionally, in an embodiment of the present invention, when the usage status of the SD or the TA meets the offline management policy, the processor 620 removes a limitation imposed on the SD or the TA based on the offline management policy.

Optionally, in an embodiment of the present invention, that the processor 620 removes a limitation on the SD or the TA based on the offline management policy includes:
the processor 620 deletes the offline management policy; or the processor 620 cancels the mark indicating that the SD or the TA is in an offline state; or the processor 620 modifies a lifecycle state corresponding to the SD or the TA into an executable state.

Optionally, in an embodiment of the present invention, the offline management instruction further includes a target SD identifier.

When the usage status of the TA meets the offline management policy, the processor 620 migrates the TA from the preset SD to a target SD corresponding to the target SD identifier, and deletes a correspondence between the preset SD and the TA in the association information.

Optionally, in an embodiment of the present invention, the processor 620 is further configured to: before the usage status of the SD or the TA meets the offline management policy, limit resource access permission of the SD or the TA.

Optionally, in an embodiment of the present invention, the processor 620 is further configured to display first prompt information on a screen of the terminal based on the usage status of the SD; or
the processor 620 is further configured to display second prompt information on a screen of the terminal based on the usage status of the TA.

Optionally, in an embodiment of the present invention, the offline management instruction further includes at least one first client application CA identifier, and the at least one first CA identifier is an identifier corresponding to at least one first CA that is allowed to use the offline management instruction; and that the receiver 610 is configured to receive an offline management instruction sent by a rich execution environment REE of the terminal includes:
the receiver 610 receives an offline management instruction sent by a second CA in the REE; and
the processor 620 is further configured to: before the processor 620 executes the offline management operation corresponding to the offline management instruction, execute the offline management operation corresponding to the offline management instruction when determining that a second CA identifier corresponding to the second CA is consistent with any one of the at least one first CA identifier.

Optionally, in an embodiment, the offline management instruction is an offline deletion instruction. The processor 620 is further configured to: after the processor 620 determines that the second CA identifier corresponding to the second CA is consistent with the any one of the at least one first CA identifier, execute the offline management instruction when determining that no first CA corresponding to the at least one first CA identifier exists in the REE other than the second CA.

Optionally, in this embodiment of the present invention, the offline management instruction further includes indication information, and the indication information is used to indicate to synchronously delete the SD in which the TA is located.

That the processor 620 deletes the TA includes:
when determining that no associated TA exists in the SD in which the TA is located, the processor 620 deletes the TA and the SD in which the TA is located.

Optionally, in another embodiment of the present invention, the offline management instruction includes the offline TA installation instruction. The processor 620 is further configured to: after the processor 620 executes the offline management operation corresponding to the offline management instruction, delete the TA when determining that no third CA corresponding to the at least one third CA identifier exists in the REE.

The at least one third CAidentifier is at least one third CAidentifier obtained and recorded by the TEE according to the offline TA installation instruction for installing the TA offline or from the offline installed TA, and the at least one third CA corresponding to the at least one third CA identifier is a CA in which the REE needs to use the TA; the offline TA installation instruction includes at least one first CAidentifier, and the at least one first CA identifier is an identifier corresponding to at least one first CA authorized to use the offline TA installation instruction; and the at least one third CA includes the at least one first CA identifier.

Optionally, the terminal provided in this embodiment of the present invention further includes a memory 630, configured to store an instruction and data, and the processor 620 is configured to: invoke the instruction in the memory 630, and perform a corresponding operation. Optionally, the terminal further includes a transmitter 640, configured to transmit data to another device.

Functions of the function units of the terminal may be implemented by steps performed by the terminal in the embodiments shown in FIG. 3 to FIG. 8A and FIG. 8B. Therefore, a specific working process of the terminal provided in this embodiment of the present invention is not described herein again.

The terminal provided in this embodiment of the present invention may be a mobile phone. The processor is a control center of the mobile phone, is connected to all parts of the entire mobile phone by using various interfaces and lines, and performs various functions of the mobile phone and data processing by running or executing a software program and/or a module that are/is stored in the memory and by invoking data stored in the memory, to perform overall monitoring on the mobile phone. The processor may be a central processing unit (central processing unit, CPU), a general-purpose processor, a digital signal processor (digital signal processing, DSP), an application-specific integrated circuit (application specific integrated circuit, ASIC), a field programmable gate array (field programmable gate array, FPGA), or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. Optionally, the processor may include one or more processor units. Optionally, the processor may be integrated with an application processor and a modem processor. The application processor mainly processes an operating system, a user interface, an application program, and the like. The modem processor mainly processes wireless communication. It should be understood that the modem processor may not be integrated into the processor.

The memory may be configured to store a software program and a module. The processor performs various function applications of the mobile phone and data processing by running the software program and the module that are stored in the memory. The memory may mainly include a program storage area and a data storage area. The program storage area may store an operating system, an application program required by at least one function (such as a sound playback function or an image playback function), and the like. The data storage area may store data (such as audio data or a phone book) created based on use of the mobile phone, and the like. In addition, the memory may include a volatile memory such as a nonvolatile dynamic random access memory (Nonvolatile Random Access Memory, NVRAM), a phase-change random access memory (Phase Change RAM, PRAM), or a magnetoresistive random access memory (Magnetoresistive RAM, MRAM). The memory may alternatively include a nonvolatile memory such as at least one magnetic disk storage device, an electrically erasable programmable read-only memory (Electrically Erasable Programmable Read-Only Memory, EEPROM), a flash memory such as a NOR flash memory (NOR flash memory) or a NAND flash memory (NAND flash memory), or a semiconductor device such as a solid state disk (Solid State Disk, SSD). The memory may further include a combination of the foregoing types of memories.

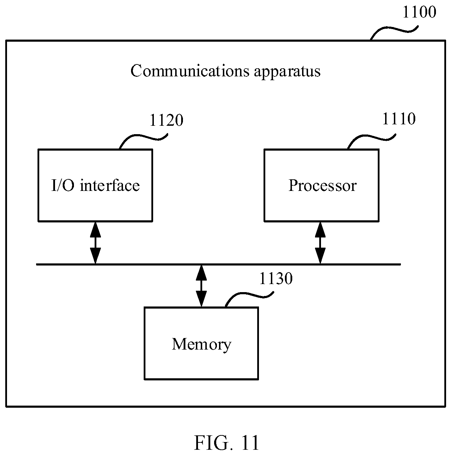

FIG. 11 is a schematic diagram of a communications apparatus according to an embodiment of the present invention. As shown in FIG. 11, the communications apparatus 1100 may be a chip, and the chip includes a processing unit and a communications unit. The processing unit may be a processor 1110, and the processor may be various types of processors described above. The communications unit may be, for example, an input/output interface 1120, a pin, or a circuit. The communications unit may include a system bus or may be connected to a system bus. Optionally, the communications apparatus further includes a storage unit. The storage unit may be a memory 1130 inside the chip, for example, a register, a cache, a random access memory (random access memory, RAM), an EEPROM, or a flash. The storage unit may alternatively be a memory outside the chip, and the memory may be various types of memories described above. The processor is connected to the memory, and the processor may run the instruction stored in the memory, so that the communications apparatus performs the method performed by the terminal in FIG. 3 to FIG. 8A and FIG. 8B.

An embodiment of the present invention further provides a computer-readable storage medium, including an instruction. When the instruction is run on a device, the device is enabled to perform the method performed in FIG. 3 to FIG. 8A and FIG. 8B.

An embodiment of the present invention further provides a computer program product including an instruction or a computer program. When the instruction is run on a computer, the computer is enabled to perform the method performed in FIG. 3 to FIG. 8A and FIG. 8B.

An embodiment of the present invention further provides a system. The system may include the terminal described in FIG. 3 to FIG. 8A and FIG. 8B, an OWE, and a service provider server.

All or some of the foregoing embodiments of the present invention may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to the embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An offline management instruction management method, wherein the management method comprises:
receiving (S101), by a trusted execution environment TEE of a terminal, an offline management instruction sent by a rich execution environment REE of the terminal, wherein the offline management instruction comprises an offline management parameter, and the offline management parameter comprises at least one of a usage duration threshold and/or a usage quantity threshold;
executing (S102), by the TEE, an offline management operation corresponding to the offline management instruction, and generating an offline management policy based on the offline management parameter; and
when a usage status of a security domain SD or a trusted application TA does not meet the offline management policy, deleting (S103), by the TEE, the SD or the TA, or restoring, by the TEE, the SD or the TA to a status before update, wherein the SD or the TA is installed offline or updated offline by the TEE according to the offline management instruction.

2. The management method according to claim 1, wherein the offline management instruction comprises an offline TA installation instruction or an offline TA update instruction, and the offline management policy is performing a preset operation within the usage quantity threshold or the usage duration threshold.

3. The management method according to any one of claims 1 or 2, wherein before the executing, by the TEE, an offline management operation corresponding to the offline management instruction, the management method further comprises:
determining (S106), by the TEE, whether identification information of the offline management instruction is comprised in first information stored in the TEE, wherein the first information comprises identification information of an offline management instruction that the TEE refuses to execute.

4. The management method according to claim 3, wherein the management method further comprises:
adding, by the TEE, the identification information to the first information when a quantity of times that the SD or the TA is deleted by the TEE reaches a preset threshold.

5. The management method according to claim 3 or 4, wherein the identification information comprises at least one of an identifier of the offline management instruction, a digest of the offline management instruction, and an identifier of an SD or a TA that needs to be managed offline according to the offline management instruction.

6. The management method according to claim 1, wherein the executing, by the TEE, an offline management operation corresponding to the offline management instruction comprises:
installing, by the TEE, the TA offline or updating the TA offline in a preset SD according to the offline management instruction.

7. The management method according to any one of claims 1 to 6, wherein after the executing, by the TEE, an offline management operation corresponding to the offline management instruction, the management method further comprises:
updating, by the TEE, association information, and marking the SD or the TA as an offline state, wherein the association information comprises a correspondence between an SD installed in the TEE and a TA installed in the SD installed in the TEE.

8. The management method according to any one of claims 1 to 7, wherein the management method further comprises:
when the usage status of the SD or the TA meets the offline management policy, removing (S104), by the TEE, a limitation imposed on the SD or the TA based on the offline management policy.

9. The management method according to claim 8, wherein the removing, by the TEE, a limitation imposed on the SD or the TA based on the offline management policy comprises:
deleting, by the TEE, the offline management policy; or canceling, by the TEE, the mark indicating that the SD or the TA is in an offline state; or modifying, by the TEE, a lifecycle state corresponding to the SD or the TA into an executable state.

10. The management method according to any one of claims 1 to 7, wherein the offline management instruction further comprises a target SD identifier, and the management method further comprises:
when the usage status of the TA meets the offline management policy, migrating (S105), by the TEE, the TA from the preset SD to a target SD corresponding to the target SD identifier, and deleting a correspondence between the preset SD and the TA in the association information.

11. The management method according to any one of claims 1 to 7, wherein the management method further comprises:
displaying, by the TEE, first prompt information on a screen of the terminal based on the usage status of the SD; or
displaying, by the TEE, second prompt information on a screen of the terminal based on the usage status of the TA.

12. The management method according to any one of claims 1 to 7, wherein the offline management instruction further comprises at least one first client application CA identifier, and the at least one first CA identifier is an identifier corresponding to at least one first CA authorized to use the offline management instruction;
the receiving, by a trusted execution environment TEE of a terminal, an offline management instruction sent by a rich execution environment REE of the terminal comprises:
receiving (S201), by the TEE, an offline management instruction sent by a second CA in the REE; and
before the executing, by the TEE, an offline management operation corresponding to the offline management instruction, the management method further comprises:
when a second CA identifier corresponding to the second CA is consistent with any one of the at least one first CA identifier, executing (S202), by the TEE, the offline management operation corresponding to the offline management instruction.

13. The management method according to claim 12, wherein the offline management instruction is an offline deletion instruction; and after the TEE determines that the second CA identifier corresponding to the second CA is consistent with the any one of the at least one first CA identifier, the management method further comprises:
when no first CA corresponding to the at least one first CA identifier exists in the REE other than the second CA, executing, by the TEE, the offline management operation corresponding to the offline management instruction.

14. A terminal, wherein the terminal comprises a trusted execution environment TEE and a rich execution environment REE; and the TEE comprises:
a receiving unit (510, 610), configured to receive an offline management instruction sent by the rich execution environment REE, wherein the offline management instruction comprises an offline management parameter, and the offline management parameter comprises at least one of a usage duration threshold and/or a usage quantity threshold; and
a processing unit (520, 620), configured to: execute an offline management operation corresponding to the offline management instruction, and generate an offline management policy based on the offline management parameter, wherein
when a usage status of a security domain SD or a trusted application TA does not meet the offline management policy, the processing unit deletes the SD or the TA, or the processing unit restores the SD or the TA to a status before update, wherein the SD or the TA is installed or updated offline by the TEE according to the offline management instruction.

15. The terminal according to claim 14, wherein the offline management instruction comprises an offline SD installation instruction or an offline SD update instruction, and the offline management policy is receiving an offline TA installation instruction within the usage quantity threshold or the usage duration threshold.

16. The terminal according to claim 15, wherein the offline management instruction comprises an offline TA installation instruction or an offline TA update instruction, and the offline management policy is performing a preset operation within the usage quantity threshold or the usage duration threshold.

## Patentansprüche

1. Offline-Verwaltungsanweisungs-Verwaltungsverfahren, wobei das Verwaltungsverfahren Folgendes umfasst:
Empfangen (S101), durch eine vertrauenswürdige Ausführungsumgebung TEE eines Endgeräts, einer durch eine umfangreiche Ausführungsumgebung REE des Endgeräts gesendeten Offline-Verwaltungsanweisung, wobei die Offline-Verwaltungsanweisung einen Offline-Verwaltungsparameter umfasst, und der Offline-Verwaltungsparameter mindestens einen eines Verwendungsdauerschwellenwerts und/oder eines Verwendungsquantitätsschwellenwerts umfasst;
Ausführen (S102), durch die TEE, einer Offline-Verwaltungsoperation, die der Offline-Verwaltungsanweisung entspricht, und Erzeugen einer Offline-Verwaltungsrichtlinie basierend auf dem Offline-Verwaltungsparameter; und
wenn ein Verwendungsstatus eines Sicherheitsbereichs SD oder einer vertrauenswürdigen Anwendung TA nicht die Offline-Verwaltungsrichtlinie erfüllt, Löschen (S103) durch die TEE, des SD oder der TA, oder Zurücksetzen, durch die TEE, des SD oder der TA auf einen Status vor Aktualisierung, wobei der SD oder die TA durch die TEE gemäß der Offline-Verwaltungsanweisung offline installiert oder offline aktualisiert wird.

2. Verwaltungsverfahren nach Anspruch 1, wobei die Offline-Verwaltungsanweisung eine Offline-TA-Installationsanweisung oder eine Offline-TA-Aktualisierungsanweisung umfasst, und die Offline-Verwaltungsrichtlinie eine voreingestellte Operation innerhalb des Verwendungsquantitätsschwellenwerts oder des Verwendungsdauerschwellenwerts durchführt.

3. Verwaltungsverfahren nach einem der Ansprüche 1 oder 2, wobei vor dem Ausführen durch die TEE, einer Offline-Verwaltungsoperation, die der Offline-Verwaltungsanweisung entspricht, das Verwaltungsverfahren ferner Folgendes umfasst:
Bestimmen (S106) durch die TEE, ob Identifikationsinformationen der Offline-Verwaltungsanweisung in der TEE gespeicherten ersten Informationen enthalten sind, wobei die ersten Informationen Identifikationsinformationen einer Offline-Verwaltungsanweisung umfassen, deren Ausführung die TEE verweigert.

4. Verwaltungsverfahren nach Anspruch 3, wobei das Verwaltungsverfahren ferner Folgendes umfasst:
Hinzufügen, durch die TEE, der Identifikationsinformationen zu den ersten Informationen, wenn eine Quantität von Malen, die der SD oder die TA durch die TEE gelöscht wird, einen voreingestellten Schwellenwert erreicht.

5. Verwaltungsverfahren nach Anspruch 3 oder 4, wobei die Identifikationsinformationen mindestens eines einer Kennung der Offline-Verwaltungsanweisung, eines Auszugs der Offline-Verwaltungsanweisung und einer Kennung eines SD oder einer TA, der bzw. die gemäß der Offline-Verwaltungsanweisung offline verwaltet werden muss, umfassen.

6. Verwaltungsverfahren nach Anspruch 1, wobei das Ausführen, durch die TEE, einer Offline-Verwaltungsoperation, die der Offline-Verwaltungsanweisung entspricht, Folgendes umfasst:
Installieren, durch die TEE, der TA offline oder Aktualisieren der TA offline in einem voreingestellten SD gemäß der Offline-Verwaltungsanweisung.

7. Verwaltungsverfahren nach einem der Ansprüche 1 bis 6, wobei nach dem Ausführen durch die TEE, einer Offline-Verwaltungsoperation, die der Offline-Verwaltungsanweisung entspricht, das Verwaltungsverfahren ferner Folgendes umfasst:
Aktualisieren, durch die TEE, von Zuordnungsinformationen, und Markieren des SD oder der TA als einen Offline-Zustand, wobei die Zuordnungsinformationen eine Entsprechung zwischen einem in der TEE installierten SD und einer TA, die in dem in der TEE installierten SD installiert ist, enthalten.

8. Verwaltungsverfahren nach einem der Ansprüche 1 bis 7, wobei das Verwaltungsverfahren ferner Folgendes umfasst:
wenn der Verwendungsstatus des SD oder der TA die Offline-Verwaltungsrichtlinie erfüllt, Entfernen (S104), durch die TEE, einer dem SD oder der TA auferlegten Einschränkung basierend auf der Offline-Verwaltungsrichtlinie.

9. Verwaltungsverfahren nach Anspruch 8, wobei das Entfernen, durch die TEE, einer dem SD oder der TA auferlegten Einschränkung basierend auf der Offline-Verwaltungsrichtlinie Folgendes umfasst:
Löschen, durch die TEE, der Offline-Verwaltungsrichtlinie; oder Abbrechen, durch die TEE, der Markierung, die anzeigt, dass sich der SD oder die TA in einem Offline-Zustand befindet; oder Modifizieren, durch die TEE, eines dem SD oder der TA entsprechenden Lebenszykluszustands in einen ausführbaren Zustand.

10. Verwaltungsverfahren nach einem der Ansprüche 1 bis 7, wobei die Offline-Verwaltungsanweisung ferner eine Ziel-SD-Kennung umfasst, und das Verwaltungsverfahren ferner Folgendes umfasst:
wenn der Verwendungsstatus der TA die Offline-Verwaltungsrichtlinie erfüllt, Migrieren (S105), durch die TEE, der TA von dem voreingestellten SD zu einem Ziel -SD, der der Ziel-SD-Kennung entspricht, und Löschen einer Entsprechung zwischen dem voreingestellten SD und der TA in den Zuordnungsinformationen.

11. Verwaltungsverfahren nach einem der Ansprüche 1 bis 7, wobei das Verwaltungsverfahren ferner Folgendes umfasst:
Anzeigen, durch die TEE, erster Aufforderungsinformationen auf einem Bildschirm des Endgeräts basierend auf dem Verwendungsstatus des SD; oder
Anzeigen, durch die TEE, zweiter Aufforderungsinformationen auf einem Bildschirm des Endgeräts basierend auf dem Verwendungsstatus der TA.

12. Verwaltungsverfahren nach einem der Ansprüche 1 bis 7, wobei die Offline-Verwaltungsanweisung ferner mindestens eine erste Client-Anwendungs-CA-Kennung umfasst, und die mindestens eine erste CA-Kennung eine Kennung ist, die mindestens einer ersten CA entspricht, die dazu autorisiert ist, die Offline-Verwaltungsanweisung zu verwenden;
wobei das Empfangen, durch eine vertrauenswürdige Ausführungsumgebung TEE eines Endgeräts, einer durch eine umfangreiche Ausführungsumgebung REE des Endgeräts gesendeten Offline-Verwaltungsanweisung Folgendes umfasst:
Empfangen (S201), durch die TEE, einer durch eine zweite CA in der REE gesendeten Offline-Verwaltungsanweisung; und
wobei vor dem Ausführen, durch die TEE, einer Offline-Verwaltungsoperation, die der Offline-Verwaltungsanweisung entspricht, das Verwaltungsverfahren ferner Folgendes umfasst:
wenn eine zweite CA-Kennung, die der zweiten CA entspricht, mit einer beliebigen der mindestens einen ersten CA-Kennung übereinstimmt, Ausführen (S202), durch die TEE, der Offline-Verwaltungsoperation, die der Offline-Verwaltungsanweisung entspricht.

13. Verwaltungsverfahren nach Anspruch 12, wobei die Offline-Verwaltungsanweisung eine Offline-Löschanweisung ist; und wobei, nachdem die TEE bestimmt, dass die zweite CA-Kennung, die der zweiten CA entspricht, mit der beliebigen der mindestens einen ersten CA-Kennung übereinstimmt, das Verwaltungsverfahren ferner Folgendes umfasst:
wenn außer der zweiten CA keine erste CA, die der mindestens einen ersten CA-Kennung entspricht, in der REE vorhanden ist, Ausführen, durch die TEE, der Offline-Verwaltungsoperation, die der Offline-Verwaltungsanweisung entspricht.

14. Endgerät, wobei das Endgerät eine vertrauenswürdige Ausführungsumgebung TEE und eine umfangreiche Ausführungsumgebung REE umfasst; und wobei die TEE Folgendes umfasst:
eine Empfangseinheit (510, 610), die dazu konfiguriert ist, eine durch die umfangreiche Ausführungsumgebung REE gesendete Offline-Verwaltungsanweisung zu empfangen, wobei die Offline-Verwaltungsanweisung einen Offline-Verwaltungsparameter umfasst, und der Offline-Verwaltungsparameter mindestens einen eines Verwendungsdauerschwellenwerts und/oder eines Verwendungsquantitätsschwellenwerts umfasst; und
eine Verarbeitungseinheit (520, 620), die zu Folgendem konfiguriert ist: Ausführen einer Offline-Verwaltungsoperation, die der Offline-Verwaltungsanweisung entspricht, und Erzeugen einer Offline-Verwaltungsrichtlinie basierend auf dem Offline-Verwaltungsparameter, wobei
wenn ein Verwendungsstatus eines Sicherheitsbereichs SD oder einer vertrauenswürdigen Anwendung TA nicht die Offline-Verwaltungsrichtlinie erfüllt, die Verarbeitungseinheit den SD oder die TA löscht, oder die Verarbeitungseinheit den SD oder die TA auf einen Status vor Aktualisierung zurücksetzt, wobei der SD oder die TA durch die TEE gemäß der Offline-Verwaltungsanweisung offline installiert oder aktualisiert wird.

15. Endgerät nach Anspruch 14, wobei die Offline-Verwaltungsanweisung eine Offline-SD-Installationsanweisung oder eine Offline-SD-Aktualisierungsanweisung umfasst, und die Offline-Verwaltungsrichtlinie eine Offline-TA-Installationsanweisung innerhalb des Verwendungsquantitätsschwellenwerts oder des Verwendungsdauerschwellenwerts empfängt.

16. Endgerät nach Anspruch 15, wobei die Offline-Verwaltungsanweisung eine Offline-TA-Installationsanweisung oder eine Offline-TA-Aktualisierungsanweisung umfasst, und die Offline-Verwaltungsrichtlinie eine voreingestellte Operation innerhalb des Verwendungsquantitätsschwellenwerts oder des Verwendungsdauerschwellenwerts durchführt.

## Revendications

1. Procédé de gestion d'instruction de gestion hors ligne, le procédé de gestion comprenant les étapes consistant à :
recevoir (S101), par un environnement d'exécution de confiance (TEE) d'un terminal, une instruction de gestion hors ligne envoyée par un environnement d'exécution riche (REE) du terminal, l'instruction de gestion hors ligne comprenant un paramètre de gestion hors ligne, et le paramètre de gestion hors ligne comprenant un seuil de durée d'utilisation et/ou un seuil de quantité d'utilisation ;
exécuter (S 102), par le TEE, une opération de gestion hors ligne correspondant à l'instruction de gestion hors ligne et générer une stratégie de gestion hors ligne sur la base du paramètre de gestion hors ligne ; et
lorsqu'un statut d'utilisation d'un domaine de sécurité (SD) ou d'une application de confiance (TA) n'est pas conforme à la stratégie de gestion hors ligne, supprimer (S 103), par le TEE, le SD ou la TA ou restaurer, par le TEE, le SD ou la TA à un statut antérieur à la mise à jour, le SD ou la TA étant installé(e) hors ligne ou mis(e) à jour hors ligne par le TEE selon l'instruction de gestion hors ligne.

2. Procédé de gestion selon la revendication 1, dans lequel l'instruction de gestion hors ligne comprend une instruction d'installation de TA hors ligne ou une instruction de mise à jour de TA hors ligne, et la stratégie de gestion hors ligne consiste à effectuer une opération prédéfinie dans le cadre du seuil de quantité d'utilisation ou du seuil de durée d'utilisation.

3. Procédé de gestion selon l'une quelconque des revendications 1 et 2, le procédé de gestion comprenant en outre, avant l'exécution, par le TEE, d'une opération de gestion hors ligne correspondant à l'instruction de gestion hors ligne, l'étape consistant à :
déterminer (S106), par le TEE, si des informations d'identification de l'instruction de gestion hors ligne sont comprises dans des premières informations stockées dans le TEE, les premières informations comprenant des informations d'identification d'une instruction de gestion hors ligne que le TEE refuse d'exécuter.

4. Procédé de gestion selon la revendication 3, le procédé de gestion comprenant en outre l'étape consistant à :
ajouter, par le TEE, les informations d'identification aux premières informations lorsqu'un nombre de fois que le SD ou la TA est supprimé(e) par le TEE atteint un seuil prédéfini.

5. Procédé de gestion selon la revendication 3 ou 4, dans lequel les informations d'identification comprennent un identifiant de l'instruction de gestion hors ligne et/ou un résumé de l'instruction de gestion hors ligne et/ou un identifiant d'un SD ou d'une TA qui doit être géré(e) hors ligne selon l'instruction de gestion hors ligne.

6. Procédé de gestion selon la revendication 1, dans lequel l'exécution, par le TEE, d'une opération de gestion hors ligne correspondant à l'instruction de gestion hors ligne comprend l'étape consistant à :
installer, par le TEE, la TA hors ligne ou mettre à jour la TA hors ligne dans un SD prédéfini selon l'instruction de gestion hors ligne.

7. Procédé de gestion selon l'une quelconque des revendications 1 à 6, le procédé de gestion comprenant en outre, après l'exécution, par le TEE, d'une opération de gestion hors ligne correspondant à l'instruction de gestion hors ligne, l'étape consistant à :
mettre à jour, par le TEE, des informations d'association et marquer le SD ou la TA comme étant dans un état hors ligne, les informations d'association comprenant une correspondance entre un SD installé dans le TEE et une TA installée dans le SD installé dans le TEE.

8. Procédé de gestion selon l'une quelconque des revendications 1 à 7, le procédé de gestion comprenant en outre l'étape consistant à :
lorsque le statut d'utilisation du SD ou de la TA est conforme à la stratégie de gestion hors ligne, retirer (S 104), par le TEE, une limitation imposée sur le SD ou la TA sur la base de la stratégie de gestion hors ligne.

9. Procédé de gestion selon la revendication 8, dans lequel le retrait, par le TEE, d'une limitation imposée au SD ou à la TA sur la base de la stratégie de gestion hors ligne comprend l'étape consistant à :
supprimer, par le TEE, la stratégie de gestion hors ligne ; ou annuler, par le TEE, la marque indiquant que le SD ou la TA est dans un état hors ligne ; ou modifier, par le TEE, un état de cycle de vie correspondant au SD ou à la TA en un état exécutable.

10. Procédé de gestion selon l'une quelconque des revendications 1 à 7, dans lequel l'instruction de gestion hors ligne comprend en outre un identifiant de SD cible, et le procédé de gestion comprenant en outre l'étape consistant à :
lorsque le statut d'utilisation de la TA est conforme à la stratégie de gestion hors ligne, faire migrer (S 105), par le TEE, la TA du SD prédéfini vers un SD cible correspondant à l'identifiant de SD cible, et supprimer une correspondance entre le SD prédéfini et la TA dans les informations d'association.

11. Procédé de gestion selon l'une quelconque des revendications 1 à 7, le procédé de gestion comprenant en outre l'étape consistant à :
afficher, par le TEE, des premières informations d'invite sur un écran du terminal sur la base du statut d'utilisation du SD ; ou
afficher, par le TEE, des secondes informations d'invite sur un écran du terminal sur la base du statut d'utilisation de la TA.

12. Procédé de gestion selon l'une quelconque des revendications 1 à 7, dans lequel l'instruction de gestion hors ligne comprend en outre au moins un premier identifiant d'application cliente (CA), l'au moins un premier identifiant de CA étant un identifiant correspondant à au moins une première CA autorisée à utiliser l'instruction de gestion hors ligne ;
la réception, par un environnement d'exécution de confiance (TEE) d'un terminal, d'une instruction de gestion hors ligne envoyée par un environnement d'exécution riche (REE) du terminal comprenant l'étape consistant à :
recevoir (S201), par le TEE, une instruction de gestion hors ligne envoyée par une seconde CA dans le REE ; et
le procédé de gestion comprenant en outre, avant l'exécution, par le TEE, d'une opération de gestion hors ligne correspondant à l'instruction de gestion hors ligne, l'étape consistant à :
lorsqu'un second identifiant de CA correspondant à la seconde CA est cohérent avec n'importe lequel de l'au moins un premier identifiant de CA, exécuter (S202), par le TEE, l'opération de gestion hors ligne correspondant à l'instruction de gestion hors ligne.

13. Procédé de gestion selon la revendication 12, dans lequel l'instruction de gestion hors ligne est une instruction de suppression hors ligne ; et le procédé de gestion comprenant en outre, après que le TEE a déterminé que le second identifiant de CA correspondant au second CA est cohérent avec n'importe lequel de l'au moins un premier identifiant de CA, l'étape consistant à :
lorsque aucune première CA correspondant à l'au moins un premier identifiant de CA n'existe dans le REE autre que la seconde CA, exécuter, par le TEE, l'opération de gestion hors ligne correspondant à l'instruction de gestion hors ligne.

14. Terminal, le terminal comprenant un environnement d'exécution de confiance (TEE) et un environnement d'exécution riche (REE) ; et le TEE comprenant :
une unité de réception (510, 610), configurée pour recevoir une instruction de gestion hors ligne envoyée par l'environnement d'exécution riche (REE), l'instruction de gestion hors ligne comprenant un paramètre de gestion hors ligne, et le paramètre de gestion hors ligne comprenant un seuil de durée d'utilisation et/ou un seuil de quantité d'utilisation ; et
une unité de traitement (520, 620), configurée pour : exécuter une opération de gestion hors ligne correspondant à l'instruction de gestion hors ligne et générer une stratégie de gestion hors ligne sur la base du paramètre de gestion hors ligne,
lorsqu'un statut d'utilisation d'un domaine de sécurité (SD) ou d'une application de confiance (TA) n'est pas conforme à la stratégie de gestion hors ligne, l'unité de traitement supprimant le SD ou la TA ou l'unité de traitement restaurant le SD ou la TA à un statut antérieur à la mise à jour, le SD ou la TA étant installé(e) ou mis(e) à jour hors ligne par le TEE selon l'instruction de gestion hors ligne.

15. Terminal selon la revendication 14, dans lequel l'instruction de gestion hors ligne comprend une instruction d'installation de SD hors ligne ou une instruction de mise à jour de SD hors ligne, et la stratégie de gestion hors ligne consiste à recevoir une instruction d'installation de TA hors ligne dans le cadre du seuil de quantité d'utilisation ou du seuil de durée d'utilisation.

16. Terminal selon la revendication 15, dans lequel l'instruction de gestion hors ligne comprend une instruction d'installation de TA hors ligne ou une instruction de mise à jour de TA hors ligne, et la stratégie de gestion hors ligne consiste à effectuer une opération prédéfinie dans le cadre du seuil de quantité d'utilisation ou du seuil de durée d'utilisation.
